# EUROPÄISCHE PATENTSCHRIFT

(11) **EP 2 105 207 B1**
(45) Veröffentlichungstag und Bekanntmachung des Hinweises auf die Patenterteilung: **30.11.2011**
(21) Anmeldenummer: 09003645.0
(22) Anmeldetag: 13.03.2009
(51) Int. Cl.: B65G 53/22

(54) **Vorlagebehälter für pulverförminge Medien, Anlage zum Fördern von pulverförmigen Medien sowie Verfahren zum Betreiben einer solchen**
Receptable for powder-form substances, conveyer system for powder-form substances and method for operating the same
Récipient pour produits pulvérulents, dispositif de transport de produits pulvérulents et procédé d'exploitation de celui-ci

(30) Priorität: 29.03.2008 DE 102008016395
(43) Veröffentlichungstag der Anmeldung: 30.09.2009
(73) Patentinhaber: Eisenmann AG, 71032 Böblingen (DE)
(72) Erfinder: Hihn, Erwin, 72141 Walddorfhäslach (DE); Reichler, Jan, 78465 Konstanz (DE); Gronbach, Ralf, 71139 Ehningen (DE)
(74) Vertreter: Heinrich, Hanjo

(56) Entgegenhaltungen:
- EP-A- 1 092 958
- EP-A- 1 506 817
- WO-A-91/08839
- DE-A1-102005 060 833
- FR-A- 2 147 919

## Beschreibung

Die Erfindung betrifft einen Vorlagebehälter für pulverförmige Medien, insbesondere für Lackpulver, gemäß dem Oberbegriff des Anspruchs 1.

Außerdem betrifft die Erfindung eine Anlage zum Fördern von pulverförmigen Medien.

Vorlagebehälter und Anlagen der oben genannten Art sind beispielsweise aus der DE 10 2005 060 833 A1 oder der EP 1 506 817 A2 bekannt und werden insbesondere in der Oberflächentechnik, z. B. in der Automobilindustrie, zum Fördern von Lackpulver verwendet. Vorlagebehälter der eingangs genannten Art können beispielsweise eingesetzt werden, um Lackpulver zu einer Applikationseinrichtung, beispielsweise einem Rotationszerstäuber, zu fördern. Ein derartiger Vorlagebehälter kann auch dazu verwendet werden, Lackpulver aus einem Reservoir, wie etwa einem so genannten Big-Bag, in dem das Lackpulver angeliefert wird, zu einem weiteren Vorlagebehälter zu überführen, von dem aus das Lackpulver zu einer Applikationseinrichtung gefördert wird.

Eine andere Art von Vorlagebehälter, welcher ohne Fluidisierungsboden funktioniert, ist z.B. in der FR 2 147 919 A beschrieben.

Werden zur Beschichtung eines Gegenstandes mehrere Applikationseinrichtungen eingesetzt, so ist bei vom Markt her bekannten Anlagen jede Applikationseinrichtung mit jeweils einem Vorlagebehälter verbunden, aus dem die jeweilige Applikationseinrichtung mit Lackpulver gespeist wird. Mehrere Applikationseinrichtungen in Form von Rotationszerstäubern werden beispielsweise häufig zur Beschichtung des Daches einer Fahrzeugkarosserie eingesetzt. Die Menge an Lackpulver, die jedem Rotationszerstäuber pro Zeiteinheit zugeführt wird, und damit dessen Abgabemenge an Lackpulver pro Zeiteinheit, wird über den Druck gesteuert, der im Innenraum des mit dem betreffenden Rotationszerstäuber verbundenen Vorlagebehälters erzeugt wird.

Um bei Verwendung mehrerer Rotationszerstäuber, die jeweils mit einem eigenen Vorlagebehälter verbunden sind, zu einem qualitativ hochwertigen Beschichtungsergebnis zu kommen, müssen die mehreren verwendeten Vorlagebehälter "synchronisiert" werden. Dies bedeutet, dass nicht unerhebliche Anstrengungen unternommen werden müssen, um die in den parallel betriebenen Vorlagebehältern herrschenden Innendrücke auf ein annähernd gleiches Niveau zu bringen und auf diesem zu halten.

Aufgabe der vorliegenden Erfindung ist es zu ermöglichen, dass auf einfachere Weise mehreren Verbrauchern, insbesondere mehreren parallel betriebenen Applikationseinrichtungen, eine weitgehend gleiche Menge an pulverförmigem Medium pro Zeiteinheit zugeführt werden kann, indem die Abgabekanäle bei einem Vorlagebehälter durch einen technisch unkomplizierten Verschlussmechanismus verschlossen und geöffnet werden können, der einfach zu warten ist. Zudem soll bei einer dazu geeigneten Anlage eine Überwachung des Betriebsablaufs auf möglichst einfache Weise und zuverlässig durchführbar sein.

Diese Aufgabe wird durch einen Vorlagebehälter gemäß dem Gegenstand des Anspruchs 1 gelöst.

Der entsprechende Abkabelkanal jeder Abgabeeinrichtung kann dann mit einer separaten Applikationseinrichtung verbunden werden, wodurch alle Applikationseinrichtungen mit pulverförmigem Medium aus dem Förderraum des Vorlagebehälters gespeist werden können, wenn der entsprechende Abgabekanal freigegeben ist. Durch das in den Innenraum des Vorlagebehälters eingeblasene Fluidisierungsgas wird das im Förderraum befindliche, nunmehr fluidisierte Medium gleichmäßig in jeden zugänglichen Abgabekanal der mehreren Abgabeeinrichtungen gepresst und zu den damit verbundenen Applikationseinrichtungen gefördert.

Da alle Abgabekanäle dem gleichen Druck ausgesetzt sind, der im Förderraum des Vorlagebehälters herrscht, tritt - in etwa gleiche Öffnungsquerschnitte der Abgabekanäle sowie innere Widerstände jedes Teilsystems einschließlich eines Abgabekanals und einer dazu gehörigen Applikationseinheit vorausgesetzt - pro Zeiteinheit die annähernd gleiche Menge fluidisiertes Medium in die Abgabekanäle ein, wodurch zu allen Applikationseinrichtungen die annähernd gleiche Menge fluidisiertes Medium gefördert wird. Dadurch können alle mit dem Vorlagebehälter kommunizierende Applikationseinrichtungen "synchronisiert" fluidisiertes Medium abgeben, wodurch ein einheitliches Beschichtungsergebnis erzielt werden kann. Änderungen der Druckverhältnisse im Innenraum des Vorlagebehälters wirken sich gleichermaßen auf die Abgabemenge aller an den Vorlagebehälter angeschlossenen Applikationseinrichtungen aus. So kann in gewissen Grenzen auch bei einer Änderung der Druckverhältnisse im Innenraum des Vorlagebehälters ein einheitlicheres Beschichtungsergebnis erzielt werden als bei vom Markt her bekannten Beschichtungssystemen mit jeweils einem Vorlagebehälter pro Applikationseinrichtung, bei denen sich eine Druckänderung im Innenraum eines Vorlagebehälters nur auf die Abgabemenge der damit verbundenen einzelnen Applikationseinrichtung auswirkt.

Dadurch, dass wenigstens eine der Abgabeeinrichtungen eine unabhängige Abgabeeinrichtung ist, deren Abgabekanal unabhängig von einer oder mehreren der übrigen Abgabeeinrichtungen freigebbar oder verschließbar ist, können mehrere an den Vorlagebehälter angeschlossene Applikationseinrichtungen in der Weise unabhängig voneinander betrieben werden, dass eine Applikationseinrichtung, die an eine derartige unabhängige Abgabeeinrichtung angeschlossen sind, wahlweise bei dem Beschichtungsvorgang eingesetzt werden kann oder nicht, ohne dass sie in letzterem Fall von dem Vorlagebehälter getrennt werden müsste.

Indem ein Eintrittsbereich des Abgabekanals der unabhängigen Abgabeeinrichtung mit einem Ventilkörper verschließbar oder freigebbar ist, ist ein technisch verhältnismäßig unkompliziert realisierbarer Verschlussmechanismus zur Verfügung gestellt.

Dadurch, dass der Abgabekanal in einem bewegbaren Bauteil verläuft, welches zum Verschließen oder Freigeben des Eintrittsbereichs des Abgabekanals auf den Ventilkörper zu bzw. von diesem weg bewegbar ist, ist der Ventilkörper vorzugsweise in Bezug auf den Innenraum des Vorlagebehälters fest innerhalb desselben angeordnet.

Eine gute Möglichkeit der Lagerung des beweglichen Bauteils besteht darin, dass dieses ein Gleitelement umfasst, welches von einem Tragteil geführt ist, das in einem Durchlass des Gehäuses angeordnet ist. Auf diese Weise bildet das Tragteil einen Abschnitt der Außenwand des Gehäuses des Vorlagebehälters, wobei ein Abschnitt des Abgabekanals in den Förderraum des Vorlagebehälters hinein ragt, wogegen sich ein anderer Abschnitt des Abgabekanals außerhalb des Gehäuses des Vorlagebehälters befindet. Das außen liegende Ende des Abgabekanals kann dann über einen Anschlussnippel mit einem zur Applikationseinrichtung führenden Schlauch verbunden werden.

Da der Ventilkörper bezogen auf den Vorlagebehälter raumfest angeordnet ist, ist es günstig, wenn das Tragteil auf seiner dem Förderraum zugewandten Seite den Ventilkörper hält. So sind keine Halterungen im Inneren des Vorlagebehälters notwendig, wodurch dieser baulich einfach gehalten werden kann.

Vorteilhafte Weiterbildungen sind in den abhängigen Ansprüchen angegeben.

Es ist günstig, wenn die Fördermittel eine Druckeinrichtung umfassen, mittels welcher in dem Förderraum ein Überdruck erzeugbar ist. So kann die Abgabemenge durch den Vorlagebehälter erhöht werden.

In diesem Zusammenhang ist es günstig, wenn der Ventilkörper wenigstens eine Düsenöffnung zur Abgabe eines Gases aufweist, mit welchem der Eintrittsbereich des Abgabekanals beaufschlagt werden kann. Durch die Düsenöffnung im Ventilkörper kann somit Spülgas in den Eintrittsbereich hinein geblasen werden. Dadurch wird gegebenenfalls dort festgesetztes Pulver von der Wand des Eintrittsbereichs weggeblasen, wodurch beim Schließvorgang nicht die Gefahr besteht, dass der Ventilkörper und der Eingangsbereich des Abgabekanals Pulverpartikel zwischen sich einquetschen. Derartig gequetschte und dadurch vergrößerte Pulverpartikel würden dann zur Applikationseinrichtung gefördert werden, sobald der Abgabekanal wieder freigegeben wäre. Die größeren Partikel würden somit auf den zu beschichtenden Gegenstand aufgebracht, was jedoch zu einem qualitativ minderwertigeren Beschichtungsergebnis führen würde. Darüber hinaus kann das aus dem Ventilkörper austretende Gas die Fluidisierung des Mediums innerhalb des Abgabekanals und dessen Förderung unterstützen. In diesem Fall dient das Gas als Förderhilfsgas.

Da der Ventilkörper bei wiederholtem Freigeben und Verschließen des Eintrittsbereichs des Abgabekanals jeweils gegen dessen Wand anstößt und wieder von dieser wegbewegt wird, kann es dort zu Verschleißerscheinungen kommen. Aus diesem Grund ist es günstig, wenn der Eintrittsbereich des Abgabekanals durch eine Eintrittshülse gebildet ist, die vom Endbereich des Gleitelements lösbar gehalten ist. Die Eintrittshülse kann so als Verschleißteil einfach ausgetauscht werden, wenn sie nicht mehr in einwandfrei funktionsfähigem Zustand ist.

Im Hinblick auf die Lagerung des Gleitelements innerhalb des Tragteils ist es vorteilhaft, wenn das Gleitelement in einer Führungshülse verschiebbar gelagert ist, welche in einem dazu komplementären Durchlass des Tragteils fixiert ist. Auf diese Weise kann das Tragteil beispielsweise aus einem stabilen Material mit hoher Lebensdauer gefertigt sein, welches jedoch keine guten Gleiteigenschaften mit sich bringt, die ihrerseits jedoch durch die verwendete Führungshülse erfüllt werden.

Es ist günstig, wenn in dem Tragteil ein von außen zugänglicher Kanal verläuft, der zu dem Ventilkörper führt. Dieser Kanal kann insbesondere so mit dem Ventilkörper verbunden werden, dass über den Kanal Spülgas zu dem Ventilkörper geführt werden kann, welches dieser über seine Düsenöffnung abgeben kann. Dadurch, dass der Kanal im Tragteil von außen zugänglich ist, kann eine von außen zugängliche Anschlussmöglichkeit für beispielsweise eine Druckluftleitung vorgesehen sein.

Um die Bewegung des Gleitelements durchzuführen, ist es günstig, wenn das Gleitelement mit dem freien Endbereich einer Kolbenstange eines Pneumatikzylinders verbunden ist. Dabei ist es insbesondere vorteilhaft, wenn das Tragteil den Pneumatikzylinder auf seiner vom Förderraum abliegenden Seite trägt. Auf diese Weise ist die Abgabeeinrichtung mit weitgehend allen Komponenten als kompakte Einheit ausgebildet und kann bei Bedarf, beispielsweise zu Wartungszwecken, als solche vom Vorlagebehälter abgenommen werden.

Im Hinblick auf eine eingangs genannte Anlage zum Fördern von pulverförmigen Medien wird die oben genannte Aufgabe dadurch gelöst, dass sie einen oben erläuterten Vorlagebehälter umfasst.

Was die Überwachung des Betriebs derselben betrifft, so ist es günstig, wenn die Anlage eine Wägeeinrichtung umfasst, mittels welcher das Gewicht des Vorlagebehälters erfassbar ist. Aus dem erfassten Gewicht des Vorlagebehälters kann beispielsweise die darin befindliche Pulvermenge berechnet werden, indem das bekannte Tara-Gewicht des Vorlagebehälters von dem erfassten Gewicht abgezogen wird. Bei regelmäßiger Erfassung des Gewichts des Vorlagebehälters kann so z.B. die Pulvermenge, welche pro Zeiteinheit aus dem Vorlagebehälter abgegeben wird, ermittelt und überwacht werden.

Dabei ist es vorteilhaft, wenn eine mit der Wägeeinrichtung kommunizierende Datenverarbeitungs- und Steuereinrichtung vorgesehen ist, mittels welcher der Vorlagebehälter ansteuerbar ist. Dadurch können Messwerte der Wägeeinrichtung maschinell ausgewertet und gegebenenfalls Maßnahmen zur Ansteuerung des Vorlagebehälters, die durch das Messergebnis der Wägeeinrichtung veranlasst sind, automatisiert durchgeführt werden.

Dazu kann ein Verfahren angewendet werden, welches folgende Schritte umfasst:
a) Bestimmen der Ist-Menge Mₓ pulverförmigen Mediums, die sich zu einem ersten Zeitpunkt tₓ in dem Vorlagebehälter befindet;
b) Bestimmen der Ist-Menge Mₓ₊₁ pulverförmigen Mediums, die sich zu einem zweiten Zeitpunkt tₓ₊₁ in dem Vorlagebehälter befindet;
c) Berechnen eines für einen Betriebsparameter des Vorlagebehälters stehenden Betriebswertes m auf der Basis von Mₓ (tₓ und Mₓ₊₁ (tₓ₊₁) ;
d) Auswerten des Betriebswertes m.

Abhängig von dem Ergebnis der Auswertung des Betriebswertes m können gegebenenfalls für den einwandfreien Betrieb der Anlage erforderliche Maßnahmen in die Wege geleitet werden.

Dies kann automatisch erfolgen. Es kann jedoch aus Kostengründen günstig sein, wenn ein für den Betriebsparameter des Vorlagebehälters stehendes Ausgabesignal erzeugt wird und dieses mittels einer Ausgabeeinrichtung wiedergegeben wird. In diesem Fall kann die Ausgabeeinrichtung durch eine Bedienungsperson überwacht werden, welche zu gegebenem Zeitpunkt in den Betrieb der Anlage eingreift.

Es hat sich gezeigt, dass eine aussagekräftige Auswertung erfolgen kann, wenn als Betriebswert m eine Steigung m = ΔM/Δt = (Mₓ₊₁-Mₓ) / (tₓ₊₁-tₓ) berechnet wird. Diese Steigung m gibt die Abnahme von Lackpulver im Vorlagebehälter pro Zeiteinheit wieder, die bei einwandfreiem Betrieb der Anlage innerhalb gewisser Toleranzen konstant bleibt. Eine Veränderung dieser Steigung kann demzufolge eine Störung der Anlage anzeigen.

Zum Beispiel wird zur Bestimmung der Ist-Menge M pulverförmigen Mediums in dem Vorlagebehälter zu einem Zeitpunkt t das Gewicht des Vorlagebehälters zu diesem Zeitpunkt t mittels einer Wägeeinrichtung erfasst.

Nachfolgend wird ein Ausführungsbeispiel der Erfindung anhand der beigefügten Zeichnungen näher erläutert; in diesen zeigen:
- Figur 1: eine perspektivische Ansicht eines Vorlagebehälters für Lackpulver mit mehreren Abgabeeinheiten;
- Figur 2: einen Längsschnitt des Vorlagebehälters von Figur 1, wobei zwei sich gegenüberliegende Abgabeeinhei- ten im Schnitt zu erkennen sind;
- Figur 3: eine Ansicht von oben auf den Vorlagebehälter mit aufgesetztem Deckelteil;

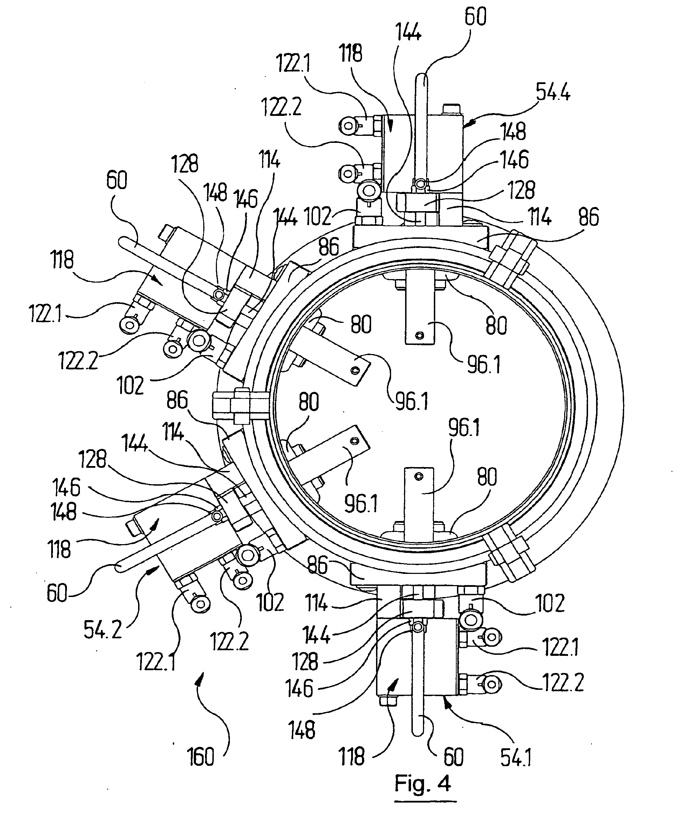

- Figur 4: eine Ansicht von oben auf den Vorlagebehälter von Figur 1 mit abgenommenem Deckelteil;
- Figur 5: eine Seitenansicht des Vorlagebehälters, wobei die- ser gegenüber der Ansicht von Figur 1 um etwa 180° verdreht ist und die Abgabeeinheiten in einem die Abgabe von Lackpulver zulassenden Freigabezustand gezeigt sind;
- Figur 6: einen Schnitt durch den Vorlagebehälter entlang der Schnittlinie VI-VI von Figur 5;
- Figur 7: einen Schnitt durch eine Abgabeeinheit in ihrem Freigabezustand entlang der Schnittlinie VII-VII von Figur 8;
- Figur 8: eine Ansicht von oben auf die Abgabeeinheit von Fi- gur 7;

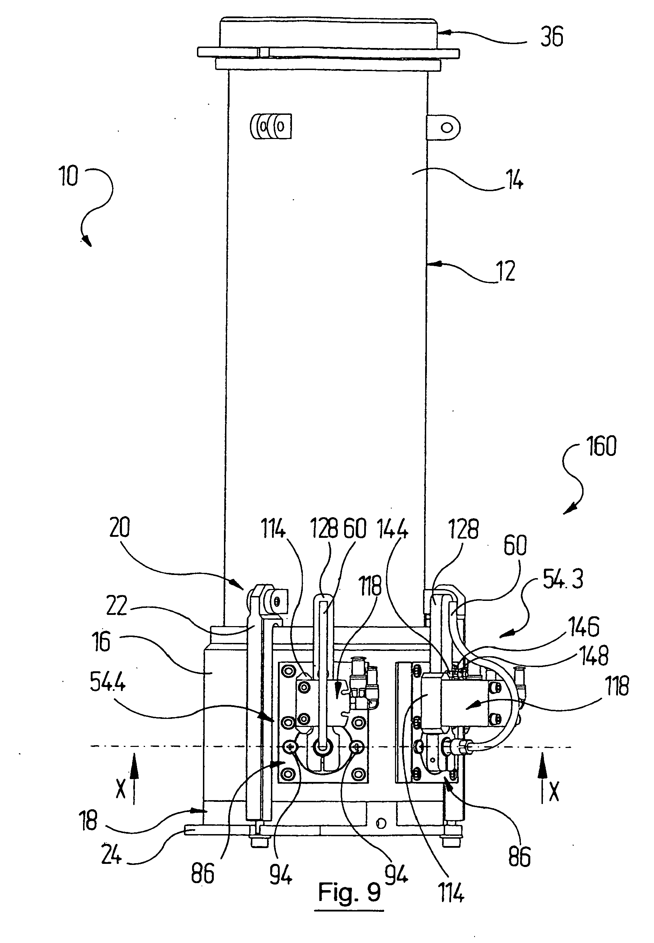

- Figur 9: eine der Figur 5 entsprechende Seitenansicht des Vorlagebehälters, wobei die Abgabeeinheiten in ei- nem die Abgabe von Lackpulver unterbrechenden Schließzustand gezeigt sind;

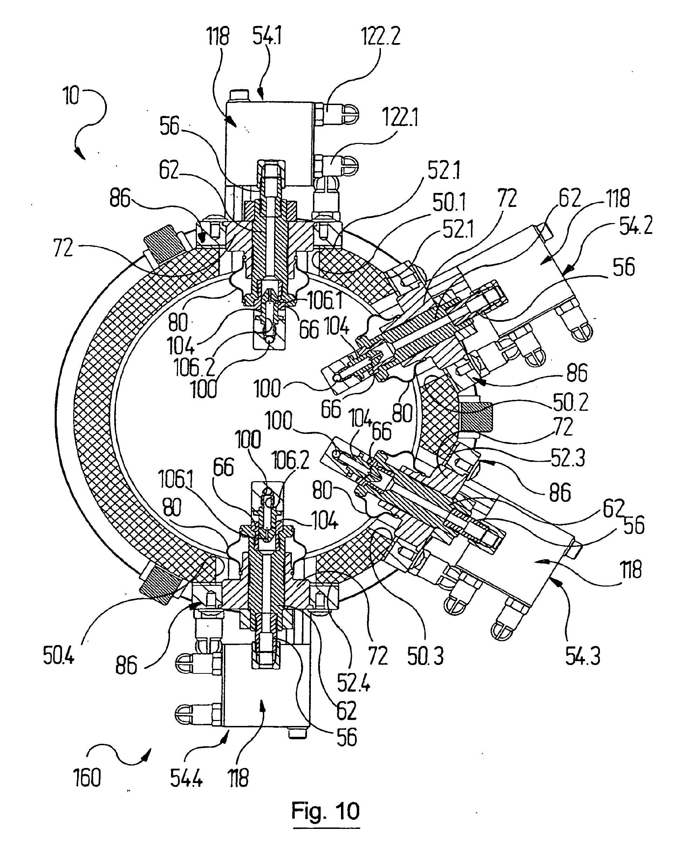

- Figur 10: einen Schnitt durch den Vorlagebehälter von Figur 9 entlang der dortigen Schnittlinie X-X;
- Figur 11: einen Schnitt einer Abgabeeinheit in ihrem Schließ- zustand entlang der Schnittlinie XI-XI von Figur 12;
- Figur 12: eine Ansicht von oben auf die Abgabeeinheit von Fi- gur 11; und
- Figur 13: ein Diagramm, welches den Betrieb des Vorlagebehäl- ters veranschaulicht und in welchem die Menge M des darin vorliegenden Lackpulvers gegen die Zeit t aufgetragen ist.

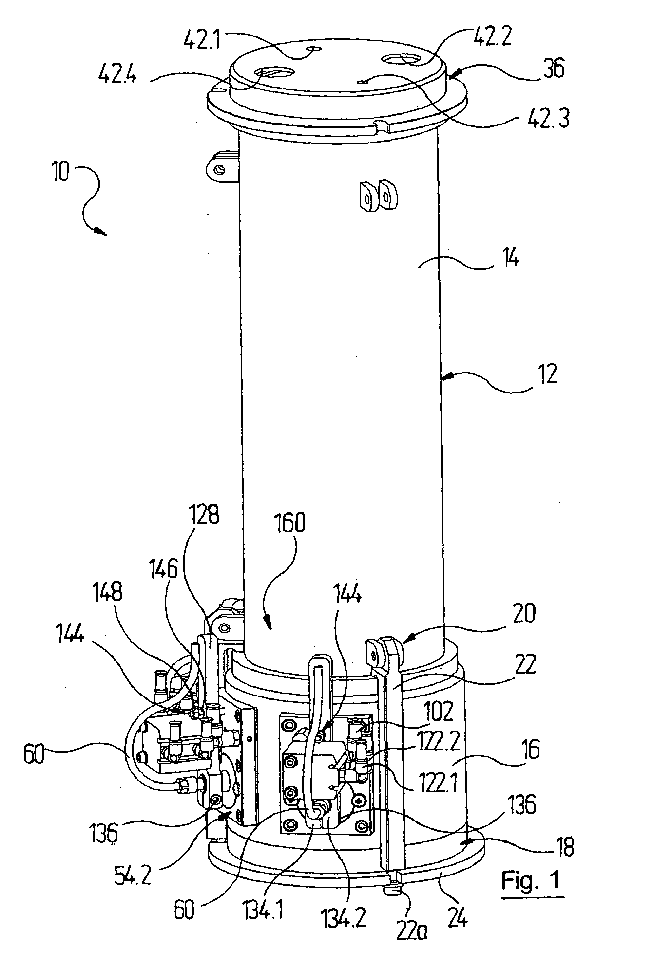

In Figur 1 ist ein insgesamt mit 10 bezeichneter Vorlagebehälter einer Pulverförderpumpe gezeigt, welcher ein zylindrisches Gehäuse 12 aufweist. Dieses umfasst einen oberen Gehäuseteil 14 und einen unteren Gehäuseteil 16, welche als zu beiden Seiten hin offene Hohlzylinder mit kreisförmigem Querschnitt ausgebildet und koaxial zueinander angeordnet sind.

Die Gehäuseteile 14 und 16 sind dicht miteinander verbunden, wobei das untere Gehäuseteil 16 auf seiner dem oberen Gehäuseteil 14 gegenüberliegenden Seite mit einem Bodenteil 18 verschlossen ist. Dazu sind das untere Gehäuseteil 16 und das Bodenteil 18 mittels eines an und für sich bekannten Klammersystems 20 an dem oberen Gehäuseteil 14 befestigt, welches drei an der Außenseite des oberen Gehäuseteils 14 verschwenkbar gelagerte Klammern 22 umfasst, deren freies Ende mittels einer Schraube 22a an einen umlaufenden Konterkragen 24 am Bodenteil 18 herangezogen werden kann.

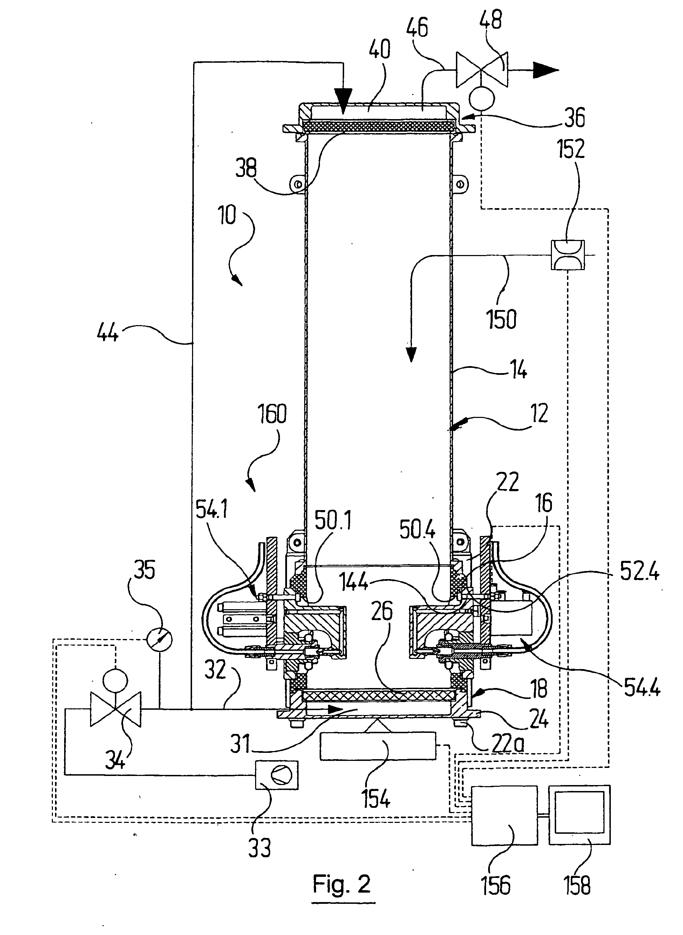

Wie in Figur 2 gezeigt ist, ist in einem dem unteren Gehäuseteil 16 zugewandten Abschnitt des Bodenteils 18 ein Fluidisierungsboden 26 aus einem porösen Material ähnlich demjenigen einer Fritte, welches gas- und insbesondere luftdurchlässig ist, gehalten. Der Fluidisierungsboden 26 unterteilt den Innenraum 28 des Gehäuses 12 in einen oberhalb des Fluidisierungsbodens 26 liegenden Förderraum 30 und einen unterhalb des Fluidisierungsbodens 26 liegenden Druckraum 31.

In diesen kann über eine in Figur 2 als Pfeil 32 veranschaulichte Druckluftleitung Druckluft aus einer Druckluftquelle 33 eingeblasen werden. Der Druck, mit welchem der Druckraum 31 mit Druckluft beaufschlagt wird, kann mittels eines Proportionalventils 34 eingestellt werden, welches in der Druckluftleitung 32 angeordnet ist. Diese Druckluft strömt durch den Fluidisierungsboden 26 hindurch in den Förderraum 30 und fluidisiert darin befindliches Lackpulver, welches dadurch fließfähig wird. Um den in der Druckluftleitung 32 herrschenden Druck ermitteln zu können, ist ein Druckmesser 35 vorgesehen.

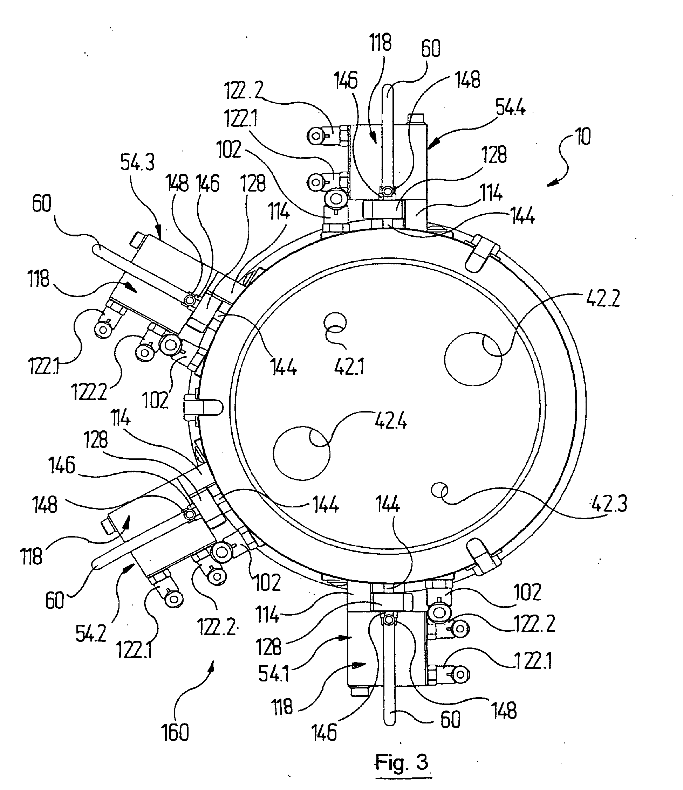

An seiner Oberseite ist das Gehäuse 12 mit einem Deckelteil 36 verschlossen, welches über ein dem Klemmsystem 20 für das untere Gehäuseteil 16 und das Bodenteil 18 entsprechendes Klemmsystem mit dem oberen Gehäuseteil 14 dicht verbunden ist, was jedoch nicht im Einzelnen gezeigt ist. Wie in Figur 2 zu erkennen ist, umfasst das Deckelteil 36 eine Filterplatte 38, welche wie der Fluidisierungsboden 26 aus porösem Material ähnlich demjenigen einer Fritte, welches gas- und insbesondere luftdurchlässig ist, gefertigt sein kann. Die Filterplatte 38 trennt einen Deckeldruckraum 40 des Deckelteils 36 vom Förderraum 30 des Gehäuses 12 ab. Das Deckelteil 36 weist vier in seinen Deckeldruckraum 40 mündende Anschlussöffnungen 42.1, 42.2, 42.3 und 42.4 auf, was in Figur 3 gut zu erkennen ist.

Von diesen ist die erste Anschlussöffnung 42.1 über eine ebenfalls in den Figuren nicht zu erkennende Druckluftleitung mit der Druckluftquelle 33 verbunden, so dass der Deckeldruckraum 40 des Deckelteils 36 mit Druckluft beaufschlagt werden kann; dies ist in Figur 2 durch den Pfeil 44 angedeutet, welcher eine Druckluftleitung veranschaulicht, die von der Druckluftleitung 32 abzweigt. Über die zweite Anschlussöffnung 42.2, welche gegenüber der ersten Anschlussöffnung 42.1 einen größeren Querschnitt hat, kann Fortluft aus dem Gehäuse 12 abgeführt werden, was in Figur 2 durch einen Pfeil 46 angedeutet ist, welcher eine Fortluftleitung veranschaulicht. In dieser ist ein einstellbares Proportionalventil 48 angeordnet. Die dritte Anschlussöffnung 42.3 dient dazu, hier nicht dargestellte Sensormittel zur Erfassung von Parametern, wie beispielsweise des im Förderraum des Gehäuses 12 herrschenden Druckes oder der dort vorliegenden Feuchtigkeit, zu erfassen. Die optional zu nutzende vierte Anschlussöffnung 42.4 ist in der Regel verschlossen.

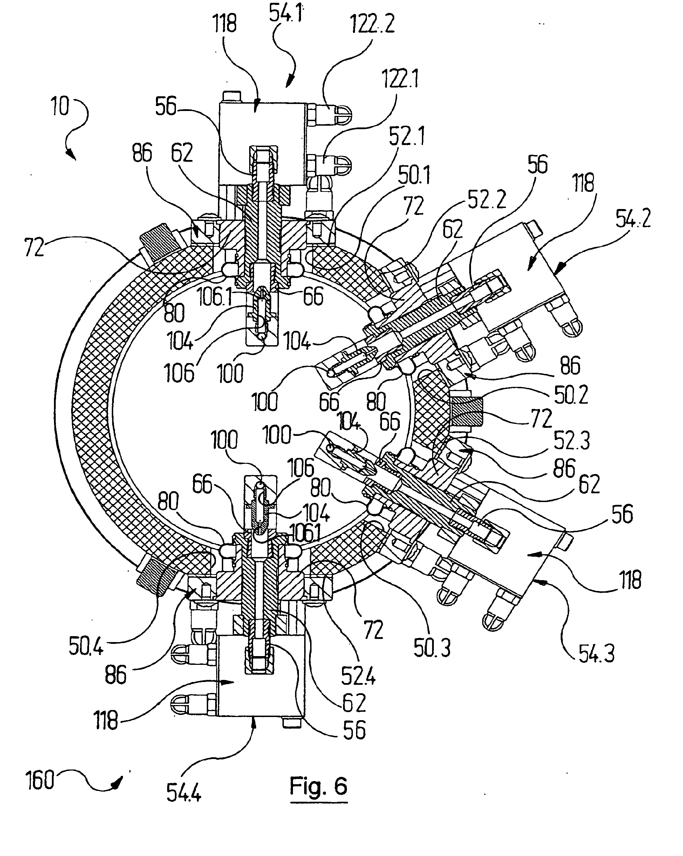

Das untere Gehäuseteil 16 hat gegenüber dem oberen Gehäuseteil 14 eine größere Wandstärke und weist vier radiale Durchlässe 50.1, 50.2, 50.3 und 50.4 auf mit rechteckigem Querschnitt auf. Diese sind entlang etwa des halben Umfangs des unteren Gehäuseteils 16 in gleichmäßigen Abständen angeordnet, so dass sich der erste Durchlass 50.1 und der vierte Durchlass 50.4 zueinander fluchtend gegenüberliegen. Dies ist beispielsweise in Figur 6 zu erkennen. Die Durchlässe 50.1 bis 50.4 weisen radial außen jeweils eine umlaufende plane Auflagefläche 52.1, 52.2, 52.3 bzw. 52.4 auf.

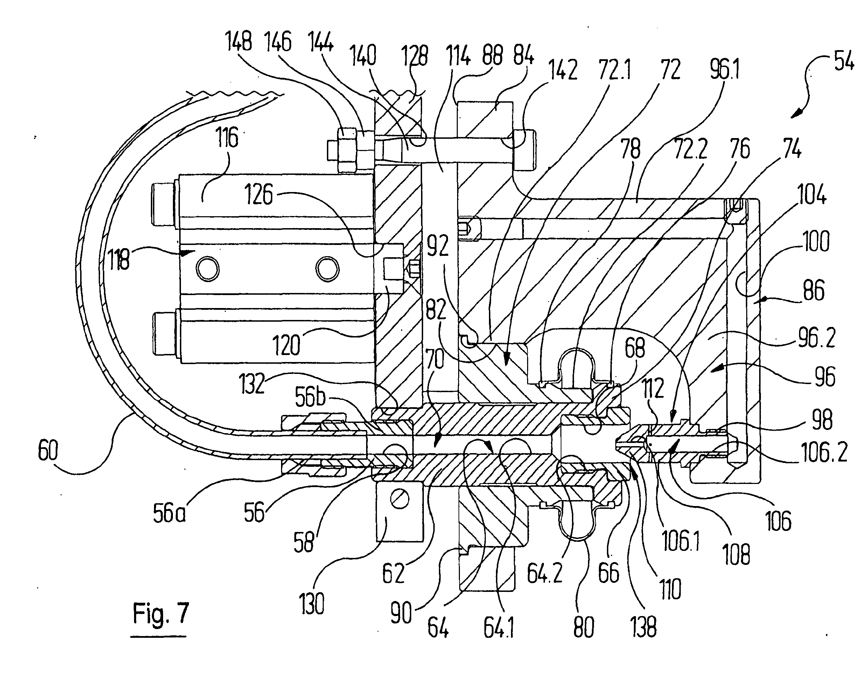

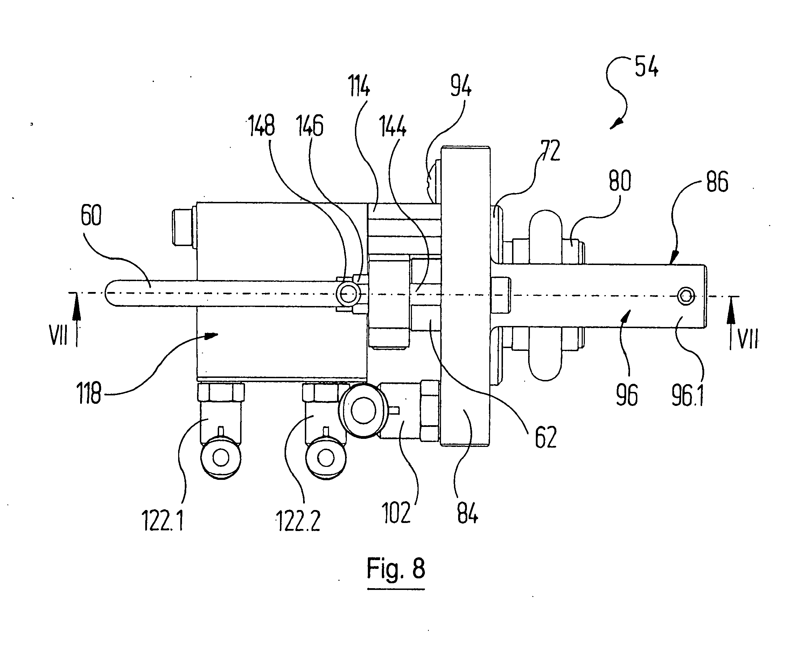

Der Vorlagebehälter 10 umfasst vier Abgabeeinheiten 54.1, 54.2, 54.3, und 54.4, welche nachstehend insbesondere anhand der Figuren 7 und 8 näher erläutert werden, wobei allgemein von der Abgabeeinheit 54 die Rede sein wird.

Die Abgabeeinheit 54 umfasst ein Anschlussstück 56 mit einem Durchgangskanal 58, welches an seinem Anschlussende 56a mit einem Schlauch 60 verbunden ist, der zu einem hier der Übersichtlichkeit halber nicht eigens dargestellten Verbraucher, wie einer Applikationseinrichtung in Form beispielsweise eines an und für sich bekannten Rotationszerstäubers, führt.

Mit seinem dem Anschlussende 56a gegenüberliegenden Endbereich 56b, der mit einem Außengewinde versehen ist, ist das Anschlussstück 56 in ein rohrförmiges Gleitelement 62 eingeschraubt, welches einen zum Durchgangskanal 58 des Anschlussstücks 56 koaxialen Durchgangskanal 64 aufweist. Der Querschnitt des Durchgangskanals 64 entspricht in einem dem Anschlussstück 56 benachbarten Bereich 64.1 dem Querschnitt von dessen Durchgangskanal 58 und erweitert sich in Richtung von dem Anschlussstück 56 weg konisch in einen Aufnahmebereich 64.2, dessen Innenmantelfläche einen mit Gewinde versehenen Abschnitt aufweist.

In den Aufnahmebereich 64.2 ist seinerseits eine Pulvereintrittshülse 66 eingeschraubt, in welcher ein Durchgangskanal 68 koaxial zu den Durchgangskanälen 58 und 64 des Anschlussstücks 56 bzw. des Gleitelements 62 verläuft.

Der Durchgangskanal 58 des Anschlussstücks 56, der Bereich 64.1 des Durchgangskanals 64 im Gleitelement 62 sowie der Durchgangskanal 68 der Pulvereintrittshülse 66 bilden gemeinsam einen Abgabekanal 70 der Abgabeeinheit 54.

Das Gleitelement 62 ist in einer Führungshülse 72 verschiebbar gelagert, welche in ihrer Längsrichtung gesehen einen dem Anschlussstück 56 zugewandten Abschnitt 72.1 mit größerem Außendurchmesser und einem sich daran anschließenden, von dem Anschlussstück 56 wegweisenden Abschnitt 72.2 mit kleinerem Außendurchmesser aufweist.

Das Gleitelement 62 trägt an seinem Ende mit dem Aufnahmebereich 64.2 einen umlaufenden Konterkragen 74, so dass es nur so lange aus dem Förderraum 30 des Vorlagebehälters 10 durch die Führungshülse 72 hindurch nach außen geschoben werden kann, bis es gegen die Führungshülse 72 anstößt (vgl. Figur 7).

In der radialen Außenfläche des Konterkragens 74 ist eine umlaufende Nut 76 eingelassen. Der Bereich 72.2 mit kleinerem Durchmesser der Führungshülse 72 weist ebenfalls eine radial umlaufende Nut auf; diese trägt das Bezugszeichen 78. Die beiden Nuten 76 und 78 dienen zum Einklipsen eines schlauchförmigen elastischen Kompensatorelements 80, welches den Bereich der Führungshülse 72 und des Konterkragens 74 am Gleitelement 62 zwischen den beiden Nuten 76 und 78 abdeckt.

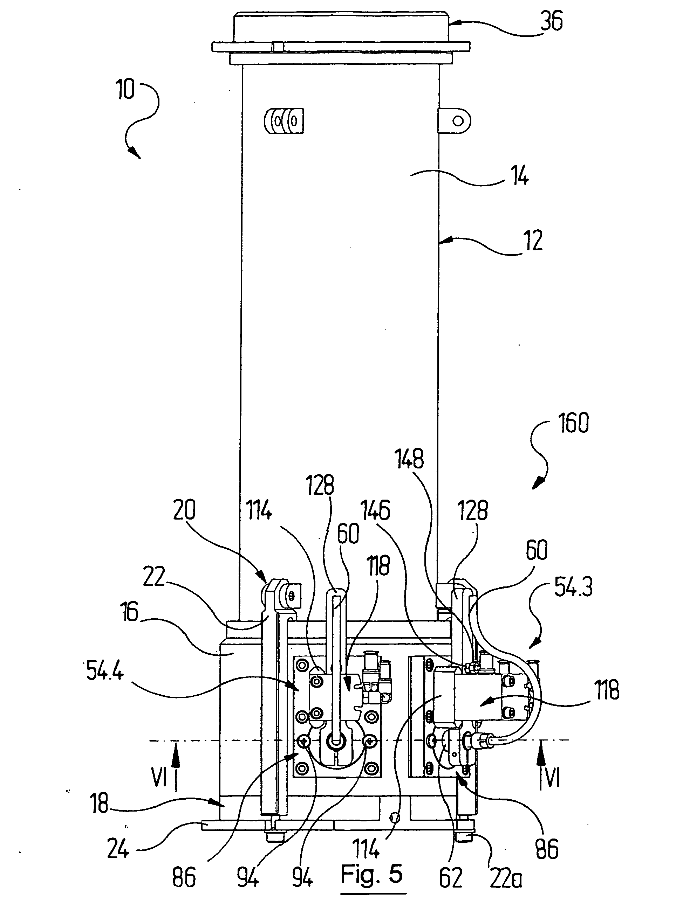

Die Führungshülse 72 ist ihrerseits dicht in einem zur Außenkontur ihres Abschnitts 72.1 komplementären Durchlass 82 in einem plattenförmigen Abschnitt 84 eines Tragteils 86 angeordnet. Dieses Tragteil 86 weist auf seiner dem Anschlussstück 56 zugewandten Seite eine plane Außenfläche 88 auf, welche mit der dem Anschlussstück 56 zugewandten Stirnringfläche der Führungshülse 72 fluchtet. Die Führungshülse 72 weist an ihrem Ende des Bereichs 72.1 mit großem Durchmesser einen radial umlaufenden Haltekragen 90 auf, mit welchem sie in einer dazu komplementären Stufe 92 des Durchlasses 82 im Tragteil 86 liegt. Die Führungshülse 72 ist durch in die plane Außenfläche 88 des Tragteils 86 eingedrehte Schrauben 94 fixiert, was beispielsweise in Figur 5 gut zu erkennen ist.

An die Seite des plattenförmigen Abschnitts 84 des Tragteils 86, die dessen planer Außenfläche 88 gegenüberliegt, ist neben dem Durchlass 82 einstückig ein rechtwinkliger Steg 96 angeformt. Dieser erstreckt sich zunächst mit einem Abschnitt 96.1 weg von der planen Außenfläche 88 des Tragteils 86 und senkrecht dazu, um dann im 90°-Winkel in einen Abschnitt 96.2 überzugehen, welcher in Richtung auf die Achse des Durchlasses 82 des Tragteils 86 verläuft und sich etwas über diese Achse hinaus erstreckt.

Der Abschnitt 96.2 des Steges 96 weist in seinem über der Längsachse des Durchlasses 82 liegenden Endbereich eine dazu koaxiale Bohrung 98 auf, welche im Inneren des Stegabschnitts 96.2 in einen Kanal 100 mündet, der durch das Tragteil 86 hindurch verläuft und auf der planen Außenfläche 88 des plattenförmigen Abschnitts 84 des Tragteils 86 in einen dort angebrachten Anschluss 102 für Druckluft mündet (vgl. Figur 8).

Ein Ventilkörper 104 ist mit einem Befestigungsende in die Bohrung 98 im Stegabschnitt 96.2 eingeschraubt und weist einen inneren Kanal 106 auf, welcher über dieses Befestigungsende mit dem Kanal 100 im Tragteil 86 kommuniziert. Der Ventilkörper 104 hat einen zylindrischen Abschnitt 108, der an dem dem Befestigungsende gegenüber liegenden Ende in einen sich in Längsrichtung nach außen konisch verjüngenden Abschnitt 110 übergeht. Der Querschnitt des zylindrischen Abschnitts 108 ist komplementär zu dem Querschnitt der Pulvereintrittshülse 66 des Gleitelements 62, so dass diese dichtend über den Ventilkörper 104 geschoben werden kann. Der Kanal 106 weist zwei Kanalabschnitte 106.1 und 106.2 auf. Der Kanalabschnitt 106.1 verläuft im konischen Abschnitt 110 des Ventilkörpers 104 und hat einen kleineren Querschnitt hat als der Kanalabschnitt 106.2, welcher im zylindrischen Abschnitt 108 des Ventilkörpers 104 angeordnet ist. Zudem gehen im zylindrischen Abschnitt 108 des Ventilkörpers nahe an dessen konischen Abschnitt 110 von dem Kanalabschnitt 106.2 mehrere radial nach außen verlaufende Durchgangskanäle 112 ab, von denen in Figur 7 zwei zu erkennen sind. Auf diese Weise wirkt der Ventilkörper 104 zugleich als Spül- und Förderdüse, worauf weiter unten nochmals eingegangen wird.

Auf der planen Außenfläche 88 des Tragteils 86 ist etwa dem Stegabschnitt 96.1 gegenüberliegend ein Befestigungssteg 114 einstückig angeformt, an dessen parallel zur planen Außenfläche 88 des Tragteils 86 verlaufender Stirnfläche ein Gehäuse 116 eines doppelwirkenden Pneumatikzylinders 118 befestigt ist. Dadurch ist der Pneumatikzylinder 118 in einem Abstand von der planen Außenfläche 88 des Tragteils 86 von diesem gehalten.

Der Pneumatikzylinder 118 umfasst eine Kolbenstange 120, welche achsparallel zu dem Gleitelement 62 verläuft und in Richtung auf das Tragteil 86 aus dem Gehäuse 116 des Pneumatikzylinders 118 herausragt. Die Kolbenstange 120 kann über zwei am Pneumatikzylinder 118 vorgesehene Druckluftanschlüsse 122.1 und 122.2 in an und für sich bekannter Weise zwischen einer eingefahrenen Stellung und einer ausgefahrenen Stellung hin- und herbewegt werden. Dazu ist die Kolbenstange 120 im Inneren des Pneumatikzylinders 118 mit einem in den Figuren nicht zu erkennenden Kolben verbunden.

Der außen liegende Endbereich der Kolbenstange 120 steckt in einer Aufnahmebohrung 126 einer langgestreckten Koppelplatte 128, welche von der gegenüberliegenden Seite her an der Kolbenstange 120 fixiert ist. Die Koppelplatte 128 erstreckt sich parallel zur planen Außenfläche 88 des Tragteils 86 in Richtung auf das Gleitelement 62, welches sie an dessen Endabschnitt umgreift, das mit dem Anschlussstück 56 verbunden ist. Dazu weist die Koppelplatte 128 einen geschlitzten Endbereich 130 auf, wobei der Schlitz in einen Durchlass 132 mündet, welcher komplementär zur Außenkontur des Gleitelements 62 an dessen umgriffenen Endabschnitt ist. Die beiden durch den Schlitz voneinander getrennten Schenkel 134.1 und 134.2 der Koppelplatte 128 können durch eine Schraube 136 (vgl. Figur 1) aneinandergezogen werden, so dass das Gleitelement 62 mit seinem Endabschnitt, der im Durchlass 132 der Koppelplatte 128 sitzt, darin verklemmt werden kann.

Durch die Koppelplatte 128 ist das Gleitelement 62 mit der Kolbenstange 120 des Pneumatikzylinders 118 gekoppelt und folgt somit dessen Bewegung. Die oben erläuterten Bauteile sind in ihren Abmessungen derart aufeinander abgestimmt, dass zwischen dem konischen Abschnitt 110 des Ventilkörpers 104 und der diesem zugewandten Eingangsöffnung der Pulvereintrittshülse 66 ein schmaler Ringspalt 138 verbleibt, wenn die Kolbenstange 120 ihre eingefahrene Stellung einnimmt. In dieser Position liegt das Gleitelement 62 mit seinem Konterkragen 74 an der Führungshülse 72 an. Dies entspricht der in Figur 7 gezeigten Freigabestellung der Abgabeeinheit 54.

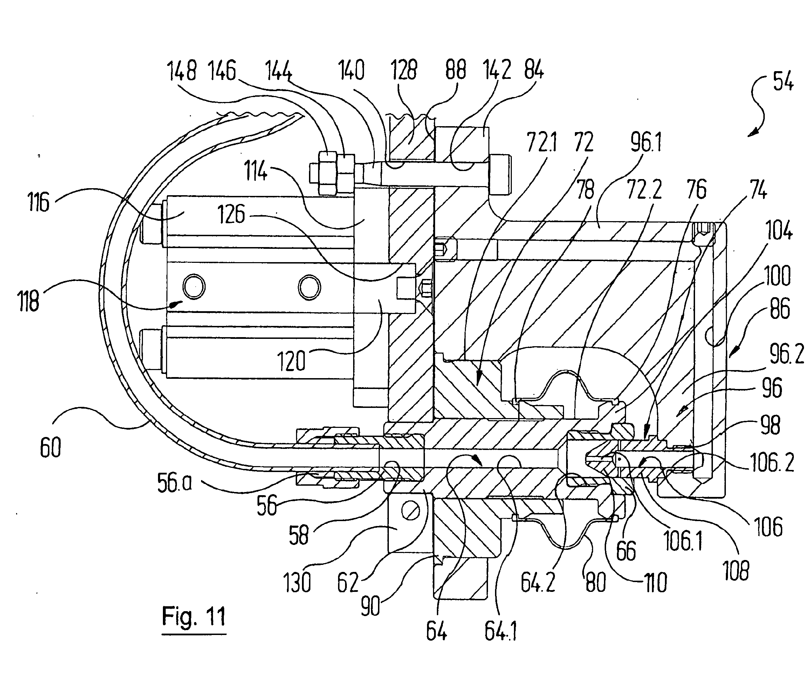

Wie insbesondere in den Figuren 7 und 11 zu erkennen ist, weisen sowohl der Ventilkörper 104 als auch die Koppelplatte 128 oberhalb des Pneumatikzylinders 118 koaxial zueinander verlaufende Durchlässe 140, 142 auf. Durch diese ist achsparallel zur Kolbenstange 120 eine mit Gewinde versehene Konterschraube 144 geschoben, auf welche auf der dem Pneumatikzylinder 118 zugewandeten Seite der Koppelplatte 128 von außen zugänglich eine Stellmutter 146 und eine Kontermutter 148 aufgeschraubt sind. Der Kopf der Konterschraube 144 liegt auf der von der Koppelplatte 128 abliegenden Seite des Ventilkörpers 104 an diesem an.

Die maximal eingefahrene Stellung der Kolbenstange 120 - und damit die maximale Breite des Ringspalts 138 zwischen dem konischen Abschnitt 110 des Ventilkörpers 104 und der diesem zugewandten Eingangsöffnung der Pulvereintrittshülse 66 - kann nunmehr dadurch verändert und gezielt eingestellt werden, dass die Lage der Stellmutter 146 auf der Konterschraube 144 verändert wird, wobei diese jeweils durch Anziehen der Kontermutter 148 fixiert wird.

Wenn die Stellmutter 146 auf der Konterschraube 144 mehr in Richtung des Ventilkörpers 104 bewegt wird, so wird der zulässige Bewegungsweg der Kolbenstange 120 in Richtung auf den Pneumatikzylinder 118 verkürzt. In der maximal eingefahrenen Stellung der Kolbenstange 120 verbleibt dann im Unterschied zur Grundeinstellung zwischen der Koppelplatte 138 und dem Gehäuse 116 des Pneumatikzylinders 118 ein Abstand. Dies hat zu Folge, dass in der dann eingenommenen Freigabestellung der Abgabeeinheit 54 der Ringspalt 138 schmaler ist als in der Freigabestellung, die in Figur 7 gezeigt ist. Indem die Stellmutter 146 auf der Konterschraube 144 wieder in Richtung von dem Ventilkörper 104 weg bewegt wird, kann die maximale Breite des Ringspalts 138 in der Freigabestellung der Abgabeeinheit 54 wieder vergrößert werden.

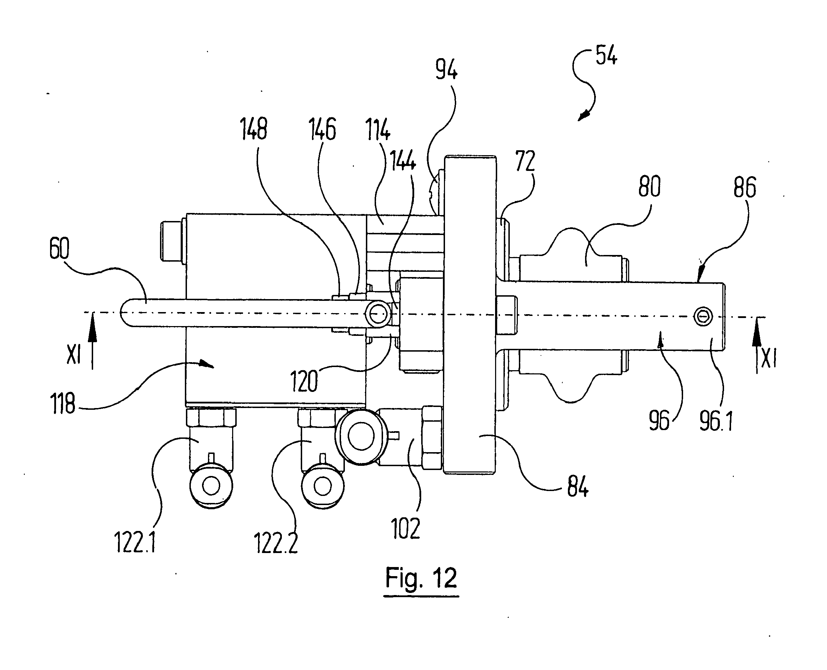

Wird nun die Kolbenstange 120 durch eine entsprechende Beaufschlagung des Anschlusses 122.1 mit Druckluft in ihre ausgefahrene Stellung bewegt, so folgt das Gleitelement 62 der Bewegung der Kolbenstange 120. Dadurch wird die Pulvereintrittshülse 66, welche sich ihrerseits mit dem Gleitelement 62 mitbewegt, über den unbeweglich verbleibenden Ventilkörper 104 geführt. Wenn die Kolbenstange 120 ihre ausgefahrene Stellung einnimmt, liegt die Innenmantelfläche der Pulvereintrittshülse 66 dichtend an der Außenmantelfläche des zylindrischen Abschnitts 108 des Ventilkörpers 104 an. Dies entspricht dem Schließzustand der Abgabeeinheit 54, welche gut in den Figuren 11 und 12 zu erkennen ist. Wie dort gezeigt ist, hat sich dann das Kompensatorelement 80 gegenüber der in Figur 7 gezeigten Stellung gedehnt und deckt den durch die Verschiebung des Gleitelements 62 innerhalb der Führungshülse 72 erzeugten Zwischenraum zwischen der Führungshülse 72 und dem Konterkragen 74 des Gleitelements 62 ab, so dass sich dort kein Lackpulver absetzen kann.

Der Förderraum 30 des Vorlagebehälters 10 kann über einen nicht eigens gezeigten Pulverzuführanschluss mit Lackpulver aus einem ebenfalls nicht eigens dargestellten Reservoir beschickt werden. Dies ist in Figur 2 durch einen Pfeil 150 angedeutet, der zugleich eine entsprechende Zuführleitung veranschaulichen soll. In dieser ist ein Quetschventil 152 angeordnet, mittels welchem die dem Förderraum 30 zuzuführende Lackpulvermenge eingestellt werden kann.

Der Vorlagebehälter 10 ruht auf mehreren Wägezellen 154, von denen in Figur 2 lediglich eine Wägezelle 154 gezeigt ist. Mittels der Wägezellen 154 kann das Gewicht des Vorlagebehälters 10 mit dem darin befindlichen Lackpulver in Echtzeit bestimmt werden.

Das Proportionalventil 34 in der Druckluftleitung 32, das Proportionalventil 48 in der Fortluftleitung 46, das Quetschventil 152 in der Pulverzuführleitung 150 und die Wägezellen 154 werden mittels einer mit diesen Komponenten kommunizierenden Datenverarbeitungs- und Steuereinheit 156 angesteuert, was in Figur 2 durch gestrichelte Linien angedeutet ist. Die Datenverarbeitungs- und Steuereinheit 156 erhält außerdem eine Rückmeldung vom Druckmesser 35 in der Druckluftleitung 32.

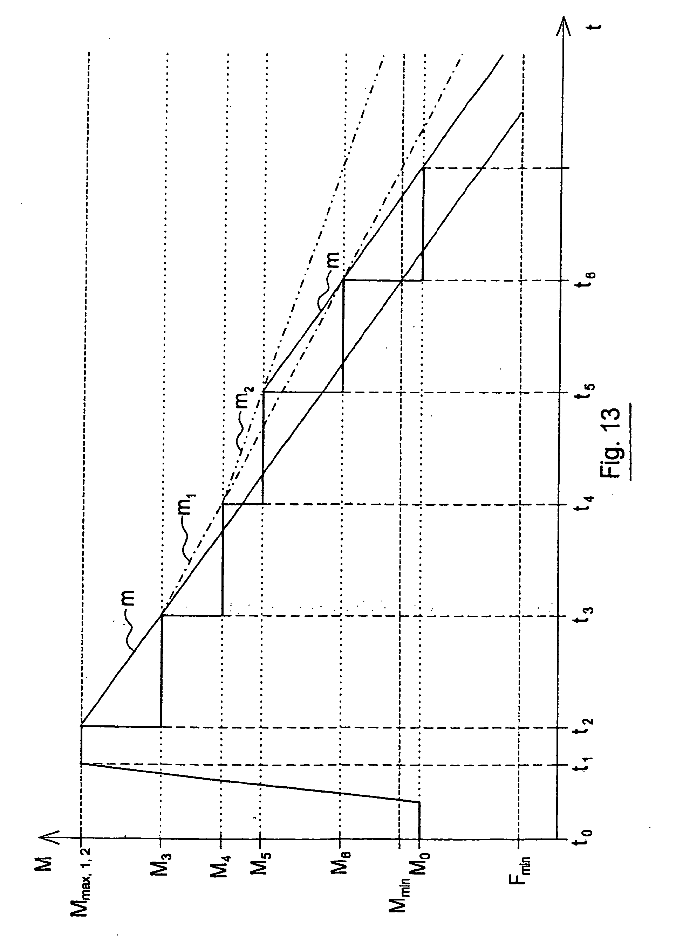

Durch die Steuereinheit 156 kann der Betriebszustand des Vorlagebehälters 10 mittels eines damit verbundenen Monitors 158 visualisiert werden, beispielsweise ähnlich wie in Figur 13 angedeutet. Darauf und auf Figur 13 wird weiter unten noch näher eingegangen.

Der oben beschriebene Vorlagebehälter 10 funktioniert wie folgt:

Bei noch leerem Förderraum 30 des Vorlagebehälters 10 werden die Abgabeeinheiten 54.1, 54.2, 54.3 und 54.4 in ihren Schließzustand gebracht, bei welchem das Gleitelement 62 mit der Pulvereintrittshülse 66 über den Ventilkörper 104 geschoben ist (vgl. beispielsweise Figur 11) und der Weg für Lackpulver in den Abgabekanal 70 hinein durch den Ventilkörper 104 versperrt ist. Dazu wird der Druckluft-Anschluss 122.1 des Pneumatikzylinders 118 mit Druckluft beaufschlagt, wobei dieser über den Anschluss 122.2 entlüftet werden kann, wodurch die Kolbenstange 120 in ihre ausgefahrene Stellung und damit das Gleitelement 62 in seine Schließstellung bewegt wird.

Nachdem nun der Förderraum 30 des Vorlagebehälters 10 mit Lackpulver befüllt (vgl. Pfeil 150 in Figur 2) worden ist, werden der Deckeldruckraum 40 im Deckelteil 36 des Vorlagebehälters 10 über dessen Anschlussöffnung 42.1 (vgl. Pfeil 44 in Figur 2) und der Druckraum 31 des Vorlagebehälters 10 (vgl. Pfeil 35 in Figur 2) aus der Druckluftquelle 33 mit Druckluft beaufschlagt, indem das Proportionalventil 34 mittels der Steuereinheit 156 derart angesteuert, dass es eine Offenstellung einnimmt.

Die Druckluft tritt aus dem Deckeldruckraum 40 von oben durch die Filterplatte 38 und aus dem Druckraum 31 im unteren Gehäuseteil 16 von unten in den Förderraum 30 ein. Der Förderraum 30 wird auf einen Überdruck von etwa 0,2 bar bis 0,5 bar gebracht. Das einstellbare Ventil 48 in der Fortluftleitung 46 wird mittels der Steuereinheit 156 so eingestellt, dass das Abströmen der Fortluft an den Zustrom von Druckluft über die Leitungen 32 und 44 angepasst ist und der Überdruck im Förderraum 30 des Vorlagebehälters 10 gehalten wird.

Der Wert, auf welchen der Druck im Förderraum 30 eingestellt wird, ist abhängig von der Dichte des fluidisierten Lackpulvers. So kann beispielsweise fluidisiertes Lackpulver mit einer Dichte von 5 g/cm³ bei einem Druck im Förderraum 30 von etwa 1,5 bar bis etwa 2,2 bar gefördert werden, d.h. bei einem Überdruck von 0,5 bar bis 1,2 bar.

Die Druckluft, die dem Druckraum 31 des Vorlagebehälters 10 zugeführt wird (vgl. Pfeil 32 in Figur 2), strömt als Fluidisierungsluft durch den Fluidisierungsboden 26, wodurch das sich im Förderraum 30 befindliche Lackpulver fluidisiert und damit fließfähig wird.

Jeder Schlauch 60 an einer Abgabeeinheit 54.1, 54.2, 54.3 und 54.4 ist mit einer unabhängig von den anderen betreibbaren Applikationseinrichtung verbunden. Um das fluidisierte Lackpulver aus dem Förderer 30 des Vorlagebehälters zu einem entsprechenden Verbraucher zu fördern, wird nun der Druckluft-Anschluss 122.2 des Pneumatikzylinders 118 einer entsprechenden Abgabeeinheit 54 mit Druckluft beaufschlagt, wogegen der Pneumatikzylinders 118 über den Anschluss 122.1 entlüftet werden kann. Dadurch wird die Kolbenstange 120 des Pneumatikzylinders 118 in ihre eingefahrene Stellung bewegt, wobei das Gleitelement 62 dieser Bewegung über die Koppelplatte 128 folgt. Wenn die Kolbenstange 120 des Pneumatikzylinders 118 ihre eingefahrene Stellung einnimmt, befindet sich die entsprechende Abgabeeinheit 54 in ihrem Freigabezustand, welcher beispielsweise in Figur 7 gezeigt ist. In diesem Fall liegt der Ringspalt 138 zwischen der Pulvereintrittshülse 66 und dem konischen Abschnitt 110 des Ventilkörpers 104 frei. Die maximale Breite des Ringspalts 138 kann durch eine entsprechende Position der Stellmutter 146 auf der Konterschraube 144 vorgegeben werden, wie es oben erläutert wurde.

Der Druckluftanschluss 102 am Tragteil 86 wird ebenfalls mit Druckluft beaufschlagt, so dass diese durch den Kanal 100 im Tragteil 86 zum Ventilkörper 104 strömt und von diesem aus dem Kanalabschnitt 106.1 und den radialen Durchgangskanälen 112 in die Pulvereintrittshülse 66 eingeblasen wird. Somit dient der Ventilkörper 104 zugleich als Spüldüse zum Freiblasen der Pulvereintrittshülse 66. Durch aus dem Kanalabschnitt 106.1 und aus den radialen Durchgangskanälen 112 austretende Spülluft wird die einen Ventilsitz bildende Pulvereintrittshülse 66 beim Schließvorgang von Pulverresten befreit.

Dadurch wird verhindert, dass sich ansonsten Lackpulver zwischen der Pulvereintrittshülse 66 und dem Ventilkörper 104 befinden kann, welches beim Schließen gequetscht werden könnte, so dass beim erneuten Öffnen vergrößerte Pulverpartikel zur Applikationseinrichtung gefördert werden. Die Abgabe von Druckluft über den Ventilkörper 104 aus dem Kanalabschnitt 106.1 und den radialen Durchgangskanälen 112 erfolgt während der gesamten Zeit, in der die Abgabeeinheit 54 ihren Freigabezustand einnimmt. Erst wenn das Gleitelement 62 in die Schließstellung verfahren ist, wird auch die Druckluftbeaufschlagung des Druckluftanschlusses 102 beendet. In der Schließstellung des Gleitelements 62 kann die Druckluftabgabe aus dem Kanalabschnitt 106.1 noch so lange aufrechterhalten werden, bis das noch im Schlauch 60 befindliche Lackpulver vollständig über die angeschlossene Applikationseinrichtung abgegeben wurde und der Schlauch 60 vollständig von Lackpulver befreit ist.

Durch die Abgabe von Druckluft über den Ventilkörper 104 aus dem Kanalabschnitt 106.1 wird zugleich die Förderwirkung verstärkt und die Fluidisierung des Lackpulvers innerhalb des Gleitelements 62 unterstützt, wenn das Gleitelement 62 seine Freigabestellung einnimmt. Der Grad, in welchem die Förderwirkung verstärkt wird, kann über den Druck der aus dem Kanalabschnitt 106.1 des Kanals 106 im Ventilkörper 104 abgegebenen Druckluft eingestellt werden.

Somit kann die über den Kanalabschnitt 106.1 in die Pulvereintrittshülse 66 eingeblasene Druckluft einerseits als Spülluft zum Freiblasen derselben und andererseits als Förderhilfsmittel sowie zum Entleeren des Schlauches 60 dienen.

Die einzelnen Komponenten sind so aufeinander abgestimmt, dass der Spalt 138, welcher zwischen der Pulvereintrittshülse 66 und dem konischen Abschnitt 110 des Ventilkörpers 104 vorliegt, wenn das Gleitelement 62 seine Offenstellung einnimmt, ein Mehrfaches der mittleren Pulverpartikelgröße beträgt. Dies muss auch bei einer Verstellung der Stellmutter 146 auf der Konterschraube 144 bedacht werden. Dadurch wird verhindert, dass die sehr empfindlich auf Quetschung oder Reibung reagierenden Pulverpartikel beim Durchtritt durch den Spalt 138 in Richtung auf die Applikationseinrichtung irgendeine negative Veränderung erfahren.

Die Spaltgröße kann im Rahmen der Bewegungsfreiheit der Kolbenstange 120 des Pneumatikzylinders 118 variabel eingestellt werden, es wird jedoch in der Regel für alle Abgabeeinheiten 54.1, 54.2, 54.3, 54.4 der gleiche Abstand vorgegeben. Durch die Zuführung von Druckluft in den Innenraum 40 des Deckelteils 36 über den Anschluss 42.1 (vgl. Pfeil 44 in Figur 2) wird das fluidisierte Pulver im oberen Bereich des Förderers 30 des Vorlagebehälters 10 beruhigt, wodurch sich beim Abführen von Fortluft über die Anschlussöffnung 42.2 bei geöffnetem Absperrventil 48 weniger Pulver in der Filterplatte 38 im Deckelteil 36 absetzt.

Jede Abgabeeinheit 54 bildet mit dem ihr zugehörigen Schlauch 60 und der daran angeschossenen Applikationseinrichtung ein Abgabesystem 160, von denen in den Figuren lediglich eines mit einem Bezugszeichen versehen ist, wobei der Übersichtlichkeit halber auf die Darstellung einer Applikationsvorrichtung verzichtet wurde. Mittels des Abgabesystems 160 kann eine einstellbare Pulvermenge pro Zeiteinheit abgegeben werden. Der von dem Abgabesystem 160 abgegebene Volumenstrom von Lackpulver hängt ab von dem im Förderraum 30 herrschenden Druck, von der Größe des Ringspalts 138 zwischen dem konischen Abschnitt 110 des Ventilkörpers 104 und der diesem zugewandten Eingangsöffnung der Pulvereintrittshülse 66 und von dem Druck, mit dem Druckluft aus dem Kanalabschnitt 106.1 im Ventilkörper 104 in die Pulvereintrittshülse 66 eingeblasen wird.

Darüber hinaus ist der von jedem Abgabesystem 160 abgegebene Lackpulver-Volumenstrom abhängig von den baulichen Gegebenheiten und wird z.B. auch durch die Länge und den Verlauf des Schlauches 60 und die bei einem bestimmten Abgabesystem 160 verwendete Applikationseinrichtung beeinflusst.

Daher wird vor Inbetriebnahme des Vorlagebehälters 10 zunächst der abgegebene Lackpulver-Volumenstrom jedes aus Abgabeeinheit 54, Schlauch 60 und zugehöriger Applikationseinrichtung gebildeten Abgabesystem 160 vermessen. Dabei wird der Lackpulver-Volumenstrom abhängig vom im Förderraum 30 herrschenden Innendruck bestimmt, wobei die Breite des Ringspalts 138 und der Druck der Druckluft aus dem Kanalabschnitt 106.1 für alle zu vermessenden Abgabesysteme 160 gleich eingestellt bleibt.

Im Ergebnis werden von verschiedenen Applikationseinrichtungen, die von ihrer zugehörigen Abgabeeinheit 54 mit Lackpulver gespeist werden, unterschiedliche Mengen an Lackpulver pro Zeiteinheit abgegeben. Nun können die mehreren Abgabesysteme 160, die aus jeweils einer Abgabeeinheit 54, einem daran angeschlossenen Schlauch 60 und der zugehörigen Applikationseinrichtung gebildet sind, so aneinander angepasst werden, dass die Pulvermenge, die von jeder Applikationseinrichtung pro Zeiteinheit abgegeben wird, wenigstens annähernd gleich ist.

Dazu wird zunächst der Druck im Förderraum 30 auf einen Wert eingestellt, bei dem dasjenige Abgabesystem 160, welches - bei gleicher Einstellung der Breite aller Ringspalte 138 und gleichem Druck der Druckluft aus allen Kanalabschnitten 106.1 - von allen Abgabesystemen 160 den geringsten Pulverausstoß hat, den Sollwert für die abzugebende Lackpulvermenge pro Zeiteinheit erreicht. Dieses Abgabesystem 160 ist als Referenzabgabesystem 160 zu verstehen.

Die Abgabemengen der übrigen Abgabesysteme 160 sind folglich höher als diejenige des Referenzabgabesystems 160. Sie können jedoch an die Abgabemenge des Referenzabgabesystems 160 angepasst werden. Hierfür kann jede Abgabeeinheit 54 auf zwei Weisen eingestellt werden:

Einerseits der Ringspalt 138 zwischen dem konischen Abschnitt 110 des Ventilkörpers 104 und der diesem zugewandten Eingangsöffnung der Pulvereintrittshülse 66 verschmälert werden, indem die Kolbenstange 120 des Pneumatikzylinders 118 entsprechend ausgefahren wird. Wenn die korrekte Spaltbreite ermittelt ist, bei welcher die an die betreffende Abgabeeinheit 54 angeschlossene Applikationseinrichtung bei vorgegebenem Innendruck im Förderraum 30 des Vorlagebehälters 10 die Soll-Abgabemenge pro Zeiteinheit erreicht, wird die Stellmutter 146 entsprechend auf der Konterschraube 144 bewegt, bis sie an der Koppelplatte 138 anstößt, und mittels der Kontermutter 148 fixiert. Dies kann bei jeder Abgabeeinheit 54 einzeln durchgeführt werden.

Andererseits kann der Druck, mit welchem Druckluft aus dem Kanalabschnitt 106.1 des Kanals 106 im Ventilkörper 104 in die Pulvereintrittshülse 66 eingeblasen wird, mittels der Steuereinheit 156 eingestellt werden. Bei höherem Druck strömt mehr Druckluft pro Zeiteinheit in die Pulvereintrittsdüse 66 ein, so dass dadurch die dort eintretende Pulvermenge verringert wird. Das Lackpulver wird in der Pulvereintrittshülse 66 gleichsam verdünnt und der Pulverausstoß pro Zeiteinheit der zugehörigen Applikationseinrichtung verringert.

Zur Einstellung eines bestimmten Abgabesystems 160 auf die Abgabemenge pro Zeiteinheit, die als Sollwert von dem Referenzabgabesystem vorgegeben ist, können auch beide Vorgehensweisen aufeinander abgestimmt und miteinander kombiniert werden.

Die Spaltbreite am Ringspalt 138 kann jedoch nur innerhalb verhältnismäßig enger Grenzen verändert werden. Eine Anpassung der Abgabesysteme 160 aneinander über einen größeren Spielraum kann daher durch eine Veränderung des Druckes der Druckluft aus dem Kanalabschnitt 106.1 des Kanals 106 im Ventilkörper 104 erfolgen.

Im Betrieb des Vorlagebehälters 10 wird das Ist-Gewicht des Vorlagebehälters 10 mit dem darin befindlichen Lackpulver mittels der Wägezellen 154 bestimmt. Dazu senden diese in regelmäßigen Zeitabständen für das von jeder Wägezelle 154 erfasste Gewicht stehende Signale an die Steuereinheit 156. Beispielsweise können 50 Messwerte pro Sekunde pro Wägezelle 154 an die Steuereinheit 156 übermittelt werden.

Unter Berücksichtigung des bekannten Tara-Gewichts des Vorlagebehälters 10 berechnet die Steuereinheit 156 aus den von den Wägezellen 154 stammenden Signalen jeweils eine gemittelte Ist-Menge des sich im Förderraum 30 befindlichen Lackpulvers zu einem Zeitpunkt t. Dazu kann die Steuereinheit 156 je nach Programmierung alle von den Wägezellen 154 übermittelten Signale verwenden oder jeweils nur jedes fünfte, zehnte, usw. Signal bei der Berechnung berücksichtigen, wodurch der Rechenaufwand verringert werden kann.

Zum einen kann so ermittelt werden, ob für den weiteren Betrieb noch ausreichend Lackpulver im Förderraum 30 des Vorlagebehälters 10 vorliegt. Zum anderen kann erfasst werden, wenn ein Abgabesystem 160 einen Defekt aufweist, sei es durch eine Störung oder einen Ausfall der zugehörigen Applikationseinrichtung oder Abgabeeinheit 54 oder durch einen verstopften Schlauch 60.

In Figur 13 ist beispielhaft ein Diagramm gezeigt, in welchem die aus dem erfassten Gewicht des Vorlagebehälters 10 berechnete Füllmenge M, also die Menge des im Vorlagebehälter 10 vorliegenden Lackpulvers, gegen die Zeit t aufgetragen ist. Die Menge M kann beispielsweise über einen Wert in Gramm oder - bei bekannter Dichte des fluidisierten Lackpulvers - ein Volumen in Litern ausgedrückt werden.

Zu einem Zeitpunkt t₀ befindet sich eine geringe Menge M₀ im Förderraum 30 des Vorlagebehälters 10, die unterhalb eines unteren Schwellenwertes Mₘᵢₙ liegt. Unterschreitet die ermittelte Menge M diesen Schwellenwert Mₘᵢₙ, steuert die Steuereinheit 156 das Quetschventil 152 in der Pulverzuführleitung 150 derart an, dass es eine Offenstellung einnimmt, wodurch Lackpulver in den Förderraum 30 gelangt. Bevor das Quetschventil 152 in der Pulverzuführleitung 150 jedoch mittels der Steuereinheit 156 geöffnet wird, werden alle Abgabeeinheiten 54 in ihren Schließzustand gebracht.

Die während des Befüllvorgangs eintretende Gewichtszunahme des Vorlagebehälters 10 wird von den Wägezellen 154 erfasst und an die Steuereinheit 156 weitergegeben. Wenn eine ermittelte Lackpulvermenge M₁ zu einem Zeitpunkt t₁ einen oberen Schwellenwert Mₘₐₓ erreicht, der die maximale Befüllung des Vorlagebehälters 10 wiedergibt, schließt die Steuereinheit 156 das Quetschventil 152, wodurch der Befüllvorgang beendet wird.

Nun wird das im Förderraum 30 des Vorlagebehälters 10 befindliche Lackpulver fluidisiert, indem die Proportionalventile 34 und 48 in Abstimmung mit den vom Druckmesser 35 übermittelten Messwerten durch die Steuereinrichtung 156 angesteuert werden, wobei sich ein geeigneter Überdruck im Förderraum 30 aufbaut. Zum Zeitpunkt t₂, zu dem sich im Vorlagebehälter 10 eine Lackpulvermenge M₂ befindet, die Mₘₐₓ und M₁ entspricht, wird die Abgabe des Lackpulvers aus dem Vorlagebehälter 10 über alle Abgabesysteme 160 gestartet. Dazu werden alle Abgabeeinheiten 54 in ihren jeweiligen Freigabezustand gebracht.

Die Abgabe von Lackpulver aus dem Förderraum 30 des Vorlagebehälters 10 ist mit einer kontinuierlichen und gleichmäßigen Gewichtsabnahme desselben verbunden. Das Gewicht des Vorlagebehälters 10 wird - wie bereits oben erwähnt - in regelmäßigen Zeitabständen zu Zeitpunkten tₓ ermittelt und daraus die darin befindliche Lackpulvermenge Mₓ zum Zeitpunkt tₓ berechnet.

Beispielsweise kann aus der Differenz zwischen der Pulvermenge M₂ zum Zeitpunkt t₂ und der Pulvermenge M₃ zu einem späteren Zeitpunkt t₃ eine Steigung m = ΔM/Δt = (M₃-M₂)/(t₃-t₂) berechnet werden, welche die Abgabemenge pro Zeiteinheit und den einwandfreien Betrieb des Vorlagebehälters 10 widerspiegelt.

In Figur 13 liegt zum Zeitpunkt t₄ eine Lackpulvermenge M₄ im Förderraum 30 des Vorlagebehälters 10 vor. Die Differenz zwischen dieser Menge M₄ und der davor ermittelten Menge M₃ ist kleiner als die Differenz zwischen den Mengen M₃ und M₂. Die aus den Werten M₃ und M₄ zu den Zeitpunkten t₃ und t₄ bestimmte Steigung m₁ = ΔM/Δt = (M₄-M₃)/(t₄-t₃) ist ihrerseits kleiner als die zuvor bestimmte Steigung m. Diese Steigung m₁ spiegelt eine Störung bei einem Abgabesystem 160 wider, wodurch die Gewichtsabnahme des Lackpulvers pro Zeiteinheit verringert ist.

Wie in Figur 13 zu erkennen ist, ist die Differenz zwischen einer ermittelten Pulvermenge M₅ zum Zeitpunkt t₅ und der zuvor ermittelten Menge M₄ zum Zeitpunkt t₄ ihrerseits nochmals kleiner als die Differenz zwischen den Mengen M₄ und M₃. Die aus den Werten M₄ und M₅ zu den Zeitpunkten t₄ und t₅ berechnete Steigung m₂ = ΔM/Δt = (M₅-M₄)/(t₅-t₄) ist somit nochmals kleiner als die zuvor bestimmte Steigung m₁. Anhand der nochmals kleineren Steigung m₂ kann eine Bedienungsperson erkennen, dass nun bei einem weiteren Abgabesystem 160 eine Störung vorliegt, da die Gewichtsabnahme des Lackpulvers pro Zeiteinheit weiter verringert ist.

Wenn die Bedienungsperson eine Störung erkennt, kann sie die Abgabe von Lackpulver aus dem Vorlagebehälter 10 unterbrechen, indem sie alle Abgabeeinheiten 54 so ansteuert, dass diese ihren Schließzustand einnehmen. Die Abgabesysteme 160, bei denen eine Störung vorliegt, können dann durch eine Sichtprüfung ermittelt werden.

Wenn zu den Zeitpunkten t₃ und t₄ jeweils eine Abgabeeinheit 54 bewusst in ihren Schließzustand gebracht wurde, weil die daran angeschlossene Applikationseinrichtung z.B. für die Beschichtung eines Gegenstandes nicht mehr benötigt wird, können die ermittelten Steigungen m₁ und m₂ der Bedienungsperson bestätigen, dass über die fraglichen Abgabeeinheiten 54 kein Lackpulver mehr abgegeben wird.

Gemäß Figur 13 sind ab dem Zeitpunkt t₅ wieder alle Abgabesysteme 160 in einwandfreiem Zustand. Aus diesem Grund entspricht die Different der Lackpulvermenge M₅ zum Zeitpunkt t₅ und der Lackpulvermenge M₆ zum Zeitpunkt t₆ wieder der Differenz zwischen den Mengen M₂ und M₁. Dies führt ihrerseits erneut zu der Steigung m, die für den einwandfreien Betrieb des Vorlagebehälters 10 steht.

Zum Zeitpunkt t₆ unterschreitet die Pulvermenge im Förderraum 30 des Vorlagebehälters 10 den unteren Schwellenwert Mₘᵢₙ, woraufhin der Zyklus wiederholt wird, welcher mit der oben erläuterten Befüllung des Vorlagebehälters 10 beginnt.

Eine Pulverabgabe über die Abgabeeinheiten 54 ist auch dann noch ohne weiteres möglich, wenn der Schwellenwert Mₘᵢₙ unterschritten wird, bis ein minimaler Füllstand Fₘᵢₙ erreicht ist. So wird ein gewisser Sicherheitspuffer zur Verfügung gestellt.

Auf dem Monitor 158 kann zur Visualisierung des Betriebs des Vorlagebehälters 10 beispielsweise eine Grafik angezeigt werden, welche im Wesentlichen dem in Figur 13 gezeigten Diagramm entspricht. Im Verlauf des Betriebs des Vorlagebehälters verändert sich die angezeigte Grafik natürlich entsprechend. Gegebenenfalls kann auch lediglich die jeweils zu einem bestimmten Zeitpunkt t ermittelte Steigung m grafisch dargestellt werden.

In einer Abwandlung kann die Steuereinheit 156 auch Ausgabesignale an einen Lautsprecher übermitteln, gegebenenfalls auch nur dann, wenn die berechnete Steigung m eine Funktionsstörung des Vorlagebehälters 10 andeutet. In diesem Fall kann also ein akustisches Warnsignal erzeugt werden. Eine visuelle Anzeige über den Monitor 158 kann auch mit einer akustischen Ausgabe verbunden werden.

Der oben beschriebene Vorlagebehälter 10 ist insbesondere dann verwendbar, wenn mehrere Applikationseinrichtungen mit einer gleichen Pulvermenge versorgt werden sollen. Die Zuführung für jede mit einer Abgabeeinheit 54.1, 54.2, 54.3, oder 54.4 verbundene Applikationseinrichtung kann durch entsprechendes Ansteuern der zugehörigen Abgabeeinheit 54 individuell freigegeben oder unterbrochen werden, indem eine bestimmte Abgabeeinheit 54.1, 54.2, 54.3 oder 54.4 in ihren Schließzustand oder ihren Freigabezustand gebracht wird. Da der im Fördererraum 30 des Vorlagebehälters 10 herrschende Druck über die Druckluftzuführung (vgl. Pfeil 32 in Figur 2) in den Druckraum 31 des Vorlagebehälters 10 bzw. des Deckeldruckraum 40 (vgl. Pfeil 44 in Figur 2) in Verbindung mit dem Abführen von Fortluft (vgl. Pfeil 46 in Figur 2) stets auf weitgehend gleichem Niveau gehalten wird, wirkt sich das Öffnen oder Schließen des Abgabekanals 70 einer Abgabeeinheit 54 nicht auf die durch die übrigen Abgabeeinheiten 54 abgegebene Pulvermenge aus.

Der Druck im Vorlagebehälter 10 ist in der Regel so eingestellt, dass die Fördergeschwindigkeit von Lackpulver in jedem Schlauch 60 zur daran angeschlossenen Applikationseinrichtung bei ca. 3 m/sek. liegt. Wenn mit dem Vorlagebehälter 10 mehrere Applikationseinrichtungen betrieben werden, ist zur Abstimmung derselben zu beachten, ob die an die unterschiedlichen Abgabeeinheiten 54.1 bis 54.4 angeschlossenen Schläuche die gleiche Länge aufweisen bzw. welche Längenunterschiede bestehen, um die Zeitpunkte, an denen für ein einwandfreies Beschichtungsergebnis die einzelnen Abgabeeinheiten 54 in ihren Freigabezustand bzw. ihren Schließzustand gebracht werden sollen, bestimmen zu können.

Die wichtigsten Aspekte der vorliegenden Erfindung werden nun nochmals anhand der nachstehenden Sätze zusammengefasst und betreffen:
1. Einen Vorlagebehälter für pulverförmige Medien, insbesondere für Lackpulver, mit
   a) einem Gehäuse (12), welches einen Innenraum (30, 32, 40) begrenzt, der einen mit zu förderndem Medium befüllbaren Förderraum (30) und einen mit Fluidisierungsgas, insbesondere mit Druckluft, beaufschlagbaren Druckraum (32) umfasst;
   b) einem Fluidisierungsboden (26), durch welchen Fluidisierungsgas, wenn der Druckraum (32) mit Fluidisierungsgas beaufschlagt ist, aus dem Druckraum (32) in den Förderraum (30) strömt, wodurch zu förderndes Medium im Förderraum (30) fluidisiert wird;
   c) Fördermitteln (34, 44, 54), mittels derer fluidisiertes Medium aus dem Förderraum (30) heraus förderbar ist,
   dadurch gekennzeichnet, dass
   d) die Fördermittel (34, 44, 54) mehrere Abgabeeinrichtun gen (54.1, 54.2, 54.3, 54.4) mit jeweils einem Abgabekanal (70) umfassen, durch welchen hindurch fluidisiertes Medium aus dem Förderraum (30) heraus förderbar ist.
2. Einen Vorlagebehälter nach Satz 1, dadurch gekennzeichnet, dass die Fördermittel (34, 44, 54) eine Druckeinrichtung (34, 44) umfassen, mittels welcher in dem Förderraum (30) ein Überdruck erzeugbar ist.
3. Einen Vorlagebehälter nach Satz 1 oder 2, dadurch gekennzeichnet, dass wenigstens eine der Abgabeeinrichtungen (54) eine unabhängige Abgabeeinrichtung (54) ist, deren Abgabekanal (70) unabhängig von einer oder mehreren der übrigen Abgabeeinrichtungen (54) freigebbar oder verschließbar ist.
4. Einen Vorlagebehälter nach Satz 3, dadurch gekennzeichnet, dass ein Eintrittsbereich (66) des Abgabekanals (70) der unabhängigen Abgabeeinrichtung (54) mit einem Ventilkörper (104) verschließbar oder freigebbar ist.
5. Einen Vorlagebehälter nach Satz 4, dadurch gekennzeichnet, dass der Ventilkörper (104) wenigstens eine Düsenöffnung (106.1, 112) zur Abgabe eines Spülgases aufweist, mit welchem der Eintrittsbereich (66) des Abgabekanals (70) beaufschlagt werden kann.
6. Einen Vorlagebehälter nach Satz 4 oder 5, dadurch gekennzeichnet, dass der Abgabekanal (70) in einem bewegbaren Bauteil (56, 62, 66) verläuft, welches zum Verschließen oder Freigeben des Eintrittsbereichs (66) des Abgabekanals (70) auf den Ventilkörper (104) zu bzw. von diesem weg bewegbar ist.
7. Einen Vorlagebehälter nach Satz 6, dadurch gekennzeichnet, dass das bewegbare Bauteil (56, 62, 66) ein Gleitelement (62) umfasst, welches von einem Tragteil (86) geführt ist, welches in einem Durchlass (50) des Gehäuses (12) angeordnet ist.
8. Einen Vorlagebehälter nach Satz 7, dadurch gekennzeichnet, dass der Eintrittsbereich (66) des Abgabekanals (70) durch eine Eintrittshülse (66) gebildet ist, die vom Endbereich des Gleitelements (62) lösbar gehalten ist.
9. Einen Vorlagebehälter nach Satz 7 oder 8, dadurch gekennzeichnet, dass das Gleitelement (62) in einer Führungshülse (72) verschiebbar gelagert ist, welche in einem dazu komplementären Durchlass (82) des Tragteils (86) fixiert ist.
10. Einen Vorlagebehälter nach einem der Sätze 7 bis 9, dadurch gekennzeichnet, dass das Tragteil (86) auf seiner dem Förderraum (30) zugewandten Seite den Ventilkörper (104) hält.
11. Einen Vorlagebehälter nach einem der Sätze 7 bis 10, dadurch gekennzeichnet, dass in dem Tragteil (86) ein von außen zugänglicher Kanal (100) verläuft, der zu dem Ventilkörper (104) führt.
12. Einen Vorlagebehälter nach einem der Sätze 7 bis 11, dadurch gekennzeichnet, dass das Gleitelement (62) mit dem freien Endbereich einer Kolbenstange (120) eines Pneumatikzylinders (118) verbunden ist.
13. Einen Vorlagebehälter nach Satz 12, dadurch gekennzeichnet, dass das Tragteil (86) auf seiner vom Förderraum (30) abliegenden Seite den Pneumatikzylinder (118) trägt.
14. Eine Anlage zum Fördern von pulverförmigen Medien, insbesondere von Lackpulver, dadurch gekennzeichnet, dass sie einen Vorlagebehälter (10) nach einem der Sätze 1 bis 13 umfasst.
15. Eine Anlage nach Satz 14, dadurch gekennzeichnet, dass sie eine Wägeeinrichtung (154) umfasst, mittels welcher das Gewicht des Vorlagebehälters (10) erfassbar ist.
16. Eine Anlage nach Satz 15, dadurch gekennzeichnet, dass eine mit der Wägeeinrichtung (154) kommunizierende Datenverarbeitungs- und Steuereinrichtung (156) vorgesehen ist, mittels welcher der Vorlagebehälter (10) ansteuerbar ist.
17. Ein Verfahren zum Betreiben einer Anlage zum Fördern von pulverförmigen Medien, umfassend die folgenden Schritte:
   a) Bestimmen der Ist-Menge Mₓ pulverförmigen Mediums, die sich zu einem ersten Zeitpunkt tₓ in dem Vorlagebehälter (10) befindet;
   b) Bestimmen der Ist-Menge Mₓ₊₁ pulverförmigen Mediums, die sich zu einem zweiten Zeitpunkt tₓ₊₁ in dem Vorlagebehälter (10) befindet;
   c) Berechnen eines für einen Betriebsparameter des Vorlagebehälters (10) stehenden Betriebswertes m auf der Basis von Mₓ (tₓ) und Mₓ₊₁ (tₓ₊₁) ;
   d) Auswerten des Betriebswertes m.
18. Ein Verfahren nach Satz 17, bei welchem ein für den Betriebsparameter des Vorlagebehälters (10) stehendes Ausgabesignal erzeugt wird und dieses mittels einer Ausgabeeinrichtung (158) wiedergegeben wird.
19. Ein Verfahren nach Satz 17 oder 18, bei welchem als Betriebswert m die Steigung m = ΔM/Δt = (Mₓ₊₁-Mₓ) / (tₓ₊₁-tₓ) berechnet wird.
20. Ein Verfahren nach einem der Sätze 17 bis 19, bei welchem zur Bestimmung der Ist-Menge M pulverförmigen Mediums in dem Vorlagebehälter (10) zu einem Zeitpunkt t das Gewicht des Vorlagebehälters (10) zu diesem Zeitpunkt t mittels einer Wägeeinrichtung (154) erfasst wird.

## Patentansprüche

1. Vorlagebehälter für pulverförmige Medien, insbesondere für Lackpulver, mit
a) einem Gehäuse (12), welches einen Innenraum (30, 32, 40) begrenzt, der einen mit zu förderndem Medium befüllbaren Förderraum (30) und einen mit Fluidisierungsgas, insbesondere mit Druckluft, beaufschlagbaren Druckraum (32) umfasst;
b) einem Fluidisierungsboden (26), durch welchen Fluidisierungsgas, wenn der Druckraum (32) mit Fluidisierungsgas beaufschlagt ist, aus dem Druckraum (32) in den Förderraum (30) strömt, wodurch zu förderndes Medium im Förderraum (30) fluidisiert wird;
c) Fördermitteln (34, 44, 54), mittels derer fluidisiertes Medium aus dem Förderraum (30) heraus förderbar ist;
wobei
d) die Fördermittel (34, 44, 54) mehrere Abgabeeinrichtungen (54.1, 54.2, 54.3, 54.4) mit jeweils einem Abgabekanal (70) umfassen, durch welchen hindurch fluidisiertes Medium aus dem Förderraum (30) heraus förderbar ist;
e) wenigstens eine der Abgabeeinrichtungen (54) eine unabhängige Abgabeeinrichtung (54) ist, deren Abgabekanal (70) unabhängig von einer oder mehreren der übrigen Abgabeeinrichtungen (54) freigebbar oder verschließbar ist,
**dadurch gekennzeichnet, dass**
f) ein Eintrittsbereich (66) des Abgabekanals (70) der unabhängigen Abgabeeinrichtung (54) mit einem Ventilkörper (104) verschließbar oder freigebbar ist;
g) der Abgabekanal (70) in einem bewegbaren Bauteil (56, 62, 66) verläuft, welches zum Verschließen oder Freigeben des Eintrittsbereichs (66) des Abgabekanals (70) auf den Ventilkörper (104) zu oder von diesem weg bewegbar ist;
h) das bewegbare Bauteil (56, 62, 66) ein Gleitelement (62) umfasst, welches von einem Tragteil (86) geführt ist, welches in einem Durchlass (50) des Gehäuses (12) angeordnet ist;
i) das Tragteil (86) auf seiner dem Förderraum (30) zugewandten Seite den Ventilkörper (104) hält.

2. Vorlagebehälter nach Anspruch 1, **dadurch gekennzeichnet, dass** die Fördermittel (34, 44, 54) eine Druckeinrichtung (34, 44) umfassen, mittels welcher in dem Förderraum (30) ein Überdruck erzeugbar ist.

3. Vorlagebehälter nach Anspruch 1 oder 2, **dadurch gekennzeichnet, dass** der Ventilkörper (104) wenigstens eine Düsenöffnung (106.1, 112) zur Abgabe eines Spülgases aufweist, mit welchem der Eintrittsbereich (66) des Abgabekanals (70) beaufschlagt werden kann.

4. Vorlagebehälter nach einem der Ansprüche 1 bis 3, **dadurch gekennzeichnet, dass** der Eintrittsbereich (66) des Abgabekanals (70) durch eine Eintrittshülse (66) gebildet ist, die vom Endbereich des Gleitelements (62) lösbar gehalten ist.

5. Vorlagebehälter nach einem der Ansprüche 1 bis 4, **dadurch gekennzeichnet, dass** das Gleitelement (62) in einer Führungshülse (72) verschiebbar gelagert ist, welche in einem dazu komplementären Durchlass (82) des Tragteils (86) fixiert ist.

6. Vorlagebehälter nach einem der Ansprüche 1 bis 5, **dadurch gekennzeichnet, dass** in dem Tragteil (86) ein von außen zugänglicher Kanal (100) verläuft, der zu dem Ventilkörper (104) führt.

7. Vorlagebehälter nach einem der Ansprüche 1 bis 6, **dadurch gekennzeichnet, dass** das Gleitelement (62) mit dem freien Endbereich einer Kolbenstange (120) eines Pneumatikzylinders (118) verbunden ist.

8. Vorlagebehälter nach Anspruch 7, **dadurch gekennzeichnet, dass** das Tragteil (86) auf seiner vom Förderraum (30) abliegenden Seite den Pneumatikzylinder (118) trägt.

9. Anlage zum Fördern von pulverförmigen Medien, **dadurch gekennzeichnet, dass** sie einen Vorlagebehälter (10) nach einem der Ansprüche 1 bis 8 umfasst.

## Claims

1. Presentation container for powdery media, in particular for coating powder, comprising
a) a housing (12) that delimits an interior (30, 32, 40) comprising a feed chamber (30), which may be filled with medium that is to be fed, as well as a pressure chamber (32), which may be acted upon by fluidization gas, in particular by compressed air;
b) a fluidization base (26), through which, when the pressure chamber (32) is acted upon by fluidization gas, fluidization gas flows out of the pressure chamber (32) into the feed chamber (30), with the result that medium that is to be fed is fluidized in the feed chamber (30);
c) feeding means (34, 44, 54), by means of which fluidized medium may be fed out of the feed chamber (30);
wherein
d) the feeding means (34, 44, 54) comprise a plurality of discharge devices (54.1, 54.2, 54.3, 54.4) each having a discharge channel (70), through which fluidized medium may be fed out of the feed chamber (30);
e) at least one of the discharge devices (54) is an independent discharge device (54), the discharge channel (70) of which may be opened or closed independently of one or more of the remaining discharge devices (54), **characterized in that**
f) an entry region (66) of the discharge channel (70) of the independent discharge device (54) may be closed or opened by means of a valve body (104);
g) the discharge channel (70) extends in a movable component (56, 62, 66), which for closing or opening the entry region (66) of the discharge channel (70) is movable towards or away from the valve body (104);
h) the movable component (56, 62, 66) comprises a sliding element (62) that is guided by a supporting part (86) disposed in a passage (50) of the housing (12);
i) the supporting part (86) at its side facing the feed chamber (30) holds the valve body (104).

2. Presentation container according to claim 1, **characterized in that** the feeding means (34, 44, 54) comprise a pressure device (34, 44), by means of which an overpressure may be generated in the feed chamber (30).

3. Presentation container according to claim 1 or 2, **characterized in that** the valve body (104) has at least one nozzle opening (106.1, 112) for discharging a purge gas that may act upon the entry region (66) of the discharge channel (70).

4. Presentation container according to one of claims 1 to 3, **characterized in that** the entry region (66) of the discharge channel (70) is formed by an entry sleeve (66) that is held releasably by the end region of the sliding element (62).

5. Presentation container according to one of claims 1 to 4, **characterized in that** the sliding element (62) is supported displaceably in a guide sleeve (72), which is fixed in a passage (82) of the supporting part (86) that is complementary thereto.

6. Presentation container according to one of claims 1 to 5, **characterized in that** extending in the supporting part (86) is an externally accessible channel (100) that leads to the valve body (104).

7. Presentation container according to one of claims 1 to 6, **characterized in that** the sliding element (62) is connected to the free end region of a piston rod (120) of a pneumatic cylinder (118).

8. Presentation container according to claim 7, **characterized in that** the supporting part (86) at its side remote from the feed chamber (30) carries the pneumatic cylinder (118).

9. Installation for feeding powdery media, **characterized in that** it comprises a presentation container (10) according to one of claims 1 to 8.

## Revendications

1. Récipient d'alimentation pour produits pulvérulents, en particulier pour peinture en poudre, avec
a) un carter (12), qui délimite un espace intérieur (30, 32, 40) qui comprend une chambre de transport (30) pouvant être remplie de produit à transporter et une chambre de pression (32) pouvant être alimentée en gaz de fluidisation, en particulier en air comprimé ;
b) un fond de fluidisation (26), à travers lequel le gaz de fluidisation, lorsque la chambre de pression (32) est alimentée en gaz de fluidisation, s'écoule de la chambre de pression (32) dans la chambre de transport (30), de sorte que le produit à transporter est fluidisé dans la chambre de transport (30) ;
c) des moyens de transport (34, 44, 54), au moyen desquels le produit fluidisé peut être transporté hors de la chambre de transport (30) ;
sachant que
d) les moyens de transport (34, 44, 54) comprennent plusieurs dispositifs de distribution (54.1, 54.2, 54.3, 54.4) pourvus chacun d'un conduit de distribution (70), par l'intermédiaire desquels le produit fluidisé peut être transporté hors de la chambre de transport (30) ;
e) au moins un des dispositifs de distribution (54) est un dispositif de distribution indépendant (54), dont le conduit de distribution (70) peut être ouvert ou fermé à la circulation indépendamment d'un ou plusieurs des autres dispositifs de distribution (54),
**caractérisé en ce que**
f) une région d'entrée (66) du conduit de distribution (70) du dispositif de distribution indépendant (54) peut être fermée ou ouverte à la circulation par un corps de soupape (104) ;
g) le conduit de distribution (70) s'étend dans une pièce mobile (56, 62, 66) qui, afin de fermer ou d'ouvrir la région d'entrée (66) du conduit de distribution (70), peut être déplacée en direction ou en éloignement du corps de soupape (104) ;
h) la pièce mobile (56, 62, 66) comprend un élément coulissant (62), qui est guidé par un élément porteur (86) qui est disposé dans un passage (50) du carter (12) ;
i) l'élément porteur (86) maintient le corps de soupape (104) sur son côté tourné vers la chambre de transport (30).

2. Récipient d'alimentation selon la revendication 1, **caractérisé en ce que** les moyens de transport (34, 44, 54) comprennent un dispositif de pression (34, 44) au moyen duquel une surpression peut être produite dans la chambre de transport (30).

3. Récipient d'alimentation selon la revendication 1 ou 2, **caractérisé en ce que** le corps de soupape (104) présente au moins une ouverture de buse (106.1, 112) pour délivrer un gaz de rinçage qui permet d'alimenter la région d'entrée (66) du conduit de distribution (70).

4. Récipient d'alimentation selon l'une des revendications 1 à 3, **caractérisé en ce que** la région d'entrée (66) du conduit de distribution (70) est formée par une douille d'entrée (66) qui est maintenue par la région terminale de l'élément coulissant (62).

5. Récipient d'alimentation selon l'une des revendications 1 à 4, **caractérisé en ce que** l'élément coulissant (62) est monté à coulissement dans une douille de guidage (72) qui est fixée en position dans un passage complémentaire (82) de l'élément porteur (86).

6. Récipient d'alimentation selon l'une des revendications 1 à 5, **caractérisé en ce qu'**un conduit (100) accessible de l'extérieur, qui mène au corps de soupape (104), s'étend dans l'élément porteur (86).

7. Récipient d'alimentation selon l'une des revendications 1 à 6, **caractérisé en ce que** l'élément coulissant (62) est relié à la région terminale libre d'une tige de piston (120) d'un vérin pneumatique (118).

8. Récipient d'alimentation selon la revendication 7, **caractérisé en ce que** l'élément porteur (86) porte le vérin pneumatique (118) sur son côté éloigné de la chambre de transport (30).

9. Installation de transport de produits pulvérulents, **caractérisée en ce qu'**elle comprend un récipient d'alimentation (10) selon l'une des revendications 1 à 8.
